# EUROPEAN PATENT APPLICATION

(11) **EP 2 378 194 A1**
(43) Date of publication of application: **19.10.2011**
(21) Application number: 09839248.3
(22) Date of filing: 13.10.2009
(51) Int. Cl.: F21V 23/00, F21S 2/00, F21V 19/00, F21V 23/06, H04N 1/04, F21Y 103/00

(54) **ILLUMINATING DEVICE, DISPLAY DEVICE AND TELEVISION RECEIVER**

(30) Priority: 27.01.2009 JP 2009015819
(71) Applicant: Sharp Kabushiki Kaisha, Osaka-shi, Osaka 545-8522 (JP)
(72) Inventor: CHO, Shiyoshi, Osaka-shi, Osaka 545-8522 (JP)
(74) Representative: Müller-Boré & Partner Patentanwälte
(86) International application number: PCT/JP2009/067703
(87) International publication number: WO 2010/087059

(57) **Abstract**

A backlight unit 12 includes cold cathode tubes 18, a chassis 14, inverter boards 20, and relay connectors 21. The chassis 14 houses the cold cathode tubes 18. The inverter boards 20 are arranged on a side of the chassis 14 opposite from the cold cathode tubes 18, and configured to supply a drive power to the cold cathode tubes. The relay connectors 21 are mounted to the chassis 14 and configured to relay power supply from the inverter boards 20 to the cold cathode tubes 18. Each inverter board 20 can be moved from a non-inserted position and an inserted position along a direction along the board surface of the inverter board 20. The inverter board 20 is separated from the relay connectors 21 at the non-inserted position and inserted in the relay connectors 21 at the inserted position. The backlight unit 12 further includes positioning structures for positioning the inverter board 20 relative to the chassis 14 at least one of directions along the board surface of the inverter board 20.

## Description

### TECHNICAL FIELD

The present invention relates to a lighting device, a display device and a television receiver.

### BACKGROUND ART

A liquid crystal panel included in a liquid crystal display device such as a liquid crystal television receiver does not emit light. Therefore, a backlight unit that is required as a separate lighting unit. The backlight unit is arranged behind the liquid crystal panel (on an opposite side from the display surface). It includes a chassis, a number of cold cathode tubes, a multiple pieces of optical members (e.g., diffusers) and an inverter board. The chassis has an opening in a surface on the liquid crystal panel side. The cold cathode tubes are housed in the chassis. The optical members are arranged so as to cover the opening of the chassis and configured to effectively direct rays of light emitted from the cold cathode tubes toward the liquid crystal panel. The inverter board is provided for supplying power to the cold cathode tubes.

Patent Document 1 discloses an example configuration for making electrical connection between an inverter board and cold cathode tubes. In this configuration, the cold cathode tubes are arranged on the front side inside the chassis and the inverter board is arranged on the rear side outside the chassis. Relay connectors are mounted to the chassis so as to penetrate through the chassis. The cold cathode tubes are connected to internal ends of the relay connectors. The inverter board is connected to external ends of the relay connectors.
Patent Document 1: Japanese Unexamined Patent Publication No. 2007-280955

### Problem to be Solved by the Invention

When the inverter board is connected to the relay connectors in the above configuration, the inverter board is held so as to face the rear surface of the chassis and slid in the horizontal direction toward the relay connectors. Then, the inverter board is inserted into the relay connectors. The rear surface of the chassis may not be a flat surface and may have protrusions. Moreover, some parts may project from the surface of the inverter board opposite the chassis. For example, various kinds of chips may be mounted on the surface of the inverter board. If the inverter board is not properly positioned relative to the chassis with respect to a planer direction, the parts projecting from the inverter board may hit the protrusions of the chassis in the connecting process described above. If that happens, the inverter board or the chassis may be damaged.

### DISCLOSURE OF THE PRESENT INVENTION

The present invention was made in view of the foregoing circumstances. An object of the present invention is to reduce damages during assembly.

### Means for Solving the Problem

To solve the above problem, a lighting device of the present invention includes a light source, a chassis, a power supply board, a relay connector and a positioning structure. The chassis houses the light source. The power supply board is arranged on a side of the chassis opposite from the light source and configured to supply drive power to the light source. The relay connector is mounted to the chassis and configured to relay power supply from the power supply board to the light source. The power supply board can be moved along a board surface of the power supply board between a non-inserted position and an inserted position. The power supply board is separated from the relay connector at the non-inserted position and inserted in the relay connector at the inserted position. The positioning structure positions the power supply board relative to the chassis in at least one of a first direction and a second direction. The first direction is along an insertion direction of the power supply board in the relay connector. The second direction is substantially perpendicular to the first direction.

During connection of the power supply board to the relay connector, the power supply board is placed on a side of the chassis opposite from the light source and set to the non-inserted position. Then, it is moved in a direction along the board surface thereof to the inserted position. When the power supply board is set at the non-inserted position, it is positioned with respect to the first direction or the second direction by the positioning structures along the board surface thereof. Therefore, the components mounted on the power supply board at the non-inserted position or during the movement from non-inserted position to the inserted position are less likely to hit the parts on the chassis side.

Preferred embodiments of the present invention may be configured as follows.
(1) The positioning structure includes a first positioning structure that positions the power supply board in the first direction along the insertion direction of the power supply board in the relay connector. With this configuration, the power supply board is positioned with respect to the first direction along the insertion direction thereof when it is set at the non-inserted position.

(2) The first positioning structure includes a first positioning protrusion and a first positioning recess. The first positioning protrusion is provided on either one of the power supply board and the chassis. The first positioning recess is provided in the other one of the power supply board and the chassis. The first positioning recess receives the first positioning protrusion. A clearance is provided between the first positioning protrusion and an edge of the first positioning recess with respect to the insertion direction. When the power supply board is set at the non-inserted position, a front-end portion of the first positioning protrusion is in contact with a front edge of the first positioning recess with respect to the insertion direction, and a rear-end portion of the first positioning protrusion is separated from a rear edge of the first positioning recess with respect to the insertion direction with the power supply board at the non-inserted position. With this configuration, the power supply board is less likely to move to the rear with respect to the insertion direction relative to the chassis during setting thereof to the non-inserted position. Furthermore, the power supply board is allowed to move in the range corresponding to the clearance between the first positioning protrusion and the edge of the first positioning recess.

(3) The rear-end portion of the first positioning protrusion is in contact with the rear edge of the first positioning recess with the power supply board set at the inserted position. With this configuration, the power supply board is less likely to move to the front with respect to the insertion direction thereof relative to the chassis when it is moved from the non-inserted position to the inserted position.

(4) The first positioning protrusion and the first positioning recess are provided on the chassis and in the power supply board, respectively. A configuration in which the first positioning protrusion provided on the power supply board requires special design. In comparison to such a configuration, the positioning structure can be provided at the power supply board at low cost.

(5) The first positioning recess is formed by cutting a part of the power supply board. With this configuration, a position of the first positioning protrusion in the first positioning recess can be visually confirmed by viewing the power supply board from a side opposite from the chassis. Therefore, the power supply board is precisely positioned.

(6) The lighting device further includes a board stopper provided integrally with the first positioning protrusion and in contact with the power supply board from a side opposite from the chassis. The positioning recess is in a size that allows the board stopper to pass therethrough. With the board stopper, the power supply board is less likely to be deformed toward the side opposite from the chassis. Furthermore, the board stopper is provided integrally with the first positioning protrusion. Namely, the board stopper and the first positioning protrusion are collectively arranged in one area. This is preferable for reducing the size or improving the flexibility in design.

(7) The board stopper projects from the first positioning protrusion to the rear with respect to the insertion direction. If the board stopper projects from the first positioning protrusion along the board surface of the power supply board and the direction perpendicular to the insertion direction, the board stopper may disturb the mounting of the power supply board. With the above configuration in which the board stopper projects from the first positioning protrusion to the rear along the insertion direction, such a problem is less likely to occur.

(8) A rear-end portion of the board stopper is in contact with the rear edge of the first positioning recess. During setting of the power supply board at the non-inserted position, the front-end portion is in contact with the front edge of the first positioning protrusion with respect to the insertion direction. Moreover, the rear-end portion of the board stopper is in contact with the rear edge of the first positioning recess with respect to the insertion direction. Therefore, the power supply board is positioned at the front and the rear with respect to the insertion direction.

(9) The positioning structure includes a second positioning structure that positions the power supply board in the second direction perpendicular to the first direction along the insertion direction of the power supply board in the relay connector. With this configuration, the power supply board is positioned in the second direction perpendicular to the first direction that is along the insertion direction thereof when it is set at the non-inserted position.

(10) The second positioning structure includes a second positioning part that is in contact with the power supply board during a movement of the power supply board between the non-inserted position and the inserted position. With this configuration, the movement of the power supply board from the non-inserted position to the inserted position is guided by the second positioning part. Therefore, the movement of the power supply board can be stabilized.

(11) The second positioning part is in contact with a side surface of the power supply board. With this configuration, special processing is not required for the power supply board and thus the second positioning part can be prepared at low cost.

(12) The positioning structure includes a first positioning structure that positions the power supply board in the first direction along the insertion direction of the power supply board in the relay connector. The second positioning structure is connected to the first positioning structure. The first positioning structure and the second positioning structure are collectively arranged in one area. This is preferable for reducing the size or improving the flexibility in design.

(13) The lighting device further includes a board stopper provided on the chassis and in contact with the power supply board from a side opposite from the chassis. With the board stopper, the deformation of the power supply board toward the side opposite from the chassis is less likely to occur.

(14) The board stopper is in contact with the front-end portion of the power supply board with respect to the insertion direction with the power supply board in the insertion direction. The front-end portion of the power supply board with respect to the insertion direction is held by the board stopper. Therefore, reliability in connection between the power supply board and relay connector improves.

(15) The positioning structures are arranged at the front and the rear so as to be away from each other in the insertion direction of the power supply board in the relay connector. With this configuration, the power supply board is further precisely positioned. Furthermore, the positioning structures may be arranged such that a person working on them can visually confirm the positions thereof. With such a configuration, they are easily viewed.

(16) The positioning structures are arranged at an end with respect to the second direction perpendicular to the first direction that is along the insertion direction of the power supply board in the relay connector. In comparison to positioning structures arranged at the middle with respect to the second direction, limitations in design of layouts of wiring patterns and components are few.

(17) The positioning structures are arranged at ends with respect to the second direction perpendicular to the first direction that is along the insertion direction of the power supply board in the relay connector. In comparison to positioning structures arranged at the middle with respect to the second direction, limitations in design of layouts of wiring patterns and components are few. Furthermore, with the positioning structures provided at the ends with respect to the second direction, the power supply board is further precisely positioned.

(18) The lighting device further includes a lead component, a wiring pattern and a chip component. The lead component is mounted on a surface of the power supply board away from the chassis. The wiring pattern is formed on a surface of the power supply board closer to the chassis. The chip component is mounted on the surface of the power supply board close to the chassis. The power supply board is positioned relative to the chassis by the positioning structures. Therefore, the wiring pattern formed on the surface of the power supply board close to the chassis and the chip component mounted on the same surface are less likely to be damaged. Furthermore, even when the lead of the lead component mounted on the surface of the power supply board away from the chassis projects from the surface close to the chassis, the lead is less likely to be damaged.

(19) The lighting device further includes a cover mounted to the chassis between the chassis and the power supply board. The positioning structure on a chassis side is provided on the cover. In comparison to the positioning structure provided at the chassis, flexibility in design of shape or layout of the positioning structure improves.

(20) The chassis has at least one connector insertion hole that is a through hole receiving the relay connector. The cover has at least one connector hole that is a through hole continuing to the connector insertion hole and receiving the relay connector. With this configuration, the relay connector can be mounted while it is passed through the connector insertion hole of the chassis and the connector hole of the cover.

(21) The connector insertion hole is larger than the connector hole. With this configuration, the relay connector is sufficiently separated from the edges of the connector insertion hole of the chassis. Even when a high-voltage current runs through the relay connector, the current is less likely to leak to the chassis side.

(22) The cover has a holding protrusion. The holding protrusion is located between the edge of the connector insertion hole of the chassis and the relay connector. The relay connector is properly isolated from the chassis. Furthermore, the cover is positioned relative to the chassis.

(23) The at least one connector hole includes a plurality of connector holes formed in the cover in a parallel layout along the second direction perpendicular to the first direction that is along the insertion direction of the power supply board in the relay connector. The cover has a block wall portion in an area between the adjacent connector holes. The block wall portion projects toward the power supply board and in contact with the power supply board at the inserted position. The block wall portion blocks foreign substances that intend to enter through spaces between the adjacent relay connectors.

(24) The block wall portion is in contact with the front-end portion of the power supply board at the inserted position. With this configuration, foreign substances are properly blocked and not in contact with the power supply board.

(25) The cover has ribs projecting from edges of the connector holes toward the power supply board. The block wall portion is connected to the ribs. By connecting the block wall portion to the rib, no gap is present when viewed from the front with respect to the insertion direction. Foreign substances are properly blocked. Furthermore, the strength increases.

(26) The cover has at least one board support portion projecting toward the power supply board and being in contact with the power supply board so as to support at least the power supply board at the non-inserted position. With this configuration, the chassis and the power supply board can be maintained at the preferable relative positions with respect to the direction perpendicular to the board surface of the power supply board.

(27) The at least one board support portion includes a center support portion that supports a central area of the power supply board with respect to the second direction perpendicular to the first direction that is along the insertion direction of the power supply board in the relay connector. Because the central area of the power supply board is supported by the center support portion, a deformation of the power supply board including a warp is less likely to occur. Especially, if the lighting device is prepared in a large size, the power supply board may be also prepared in a large size and thus the deformation including the warp is more likely to occur. Therefore, this configuration is especially effective for the lighting device in a large size.

(28) The at least one board support portion includes a plurality of board support portions arranged in a parallel layout in the second direction. With this configuration, the deformation of the power supply board including the warp is further less likely to occur. This configuration is further effective for the power supply board in a large size.

(29) The at least one board support portion is arranged adjacently to the relay connector. With this configuration, the deformation of the power supply board including the warp around the areas adjacent to the relay connector is further less likely to occur. Therefore, the reliability in connection between the power supply board and the relay connector improves.

(30) The at least one board support portion includes at least one end support portion supporting an end of the power supply board with respect to the second direction perpendicular to the first direction that is along the insertion direction of the power supply board in the relay connector.

(31) The at least one end support portion includes a pair of end support portions supporting ends of the power supply board. The ends of the power supply board are supported by the end support portions.

(32) The at least one end support portion is connected to the positioning structure on the chassis side. The end support portion and the positioning structure are collectively arranged in one area. This is preferable for reducing the size and improving flexibility in design.

Next, to solve the problem mentioned earlier, a display device of the present invention includes the above lighting device and a display panel configured to provide display using light from the lighting device.

According to such a display device, the lighting device that illuminates the display panel is less likely to be damaged during assembly. Therefore, a manufacturing cost can be reduced and a reliable performance can be achieved.

An example of the display panel is a liquid crystal panel. Such a display device can be used as a liquid crystal display device in various applications including television receivers and personal computer displays. Such a display device is especially preferable in large-screen applications.

### Effect of the Invention

According to the present invention, damages to the components during assembly can be reduced.

### BRIEF DESCRIPTION OF THE DRAWINGS

FIG. 1 is an exploded perspective view of a television receiver according to the first embodiment of the present invention;
FIG. 2 is a cross-sectional view of a display device along a long-side direction;
FIG. 3 is a plan view of a chassis with cold cathode tubes housed therein;
FIG. 4 is a bottom view of the chassis with inverter boards mounted thereto;
FIG. 5 is a magnified bottom view of the chassis with a cover mounted thereto;
FIG. 6 is a magnified partial bottom view illustrating positioning structures of the cover;
FIG. 7 is a cross-sectional view along line vii-vii in FIG. 6 with the inverter board at a removal position;
FIG. 8 is a cross-sectional view along line viii-viii in FIG. 6 with the inverter board at the removal position;
FIG. 9 is a cross-sectional view along line ix-ix in FIG. 6 with the inverter board at the removal position;
FIG. 10 is a cross-sectional view along line x-x in FIG. 6;
FIG. 11 is a cross-sectional view along line xi-xi in FIG. 6;
FIG. 12 is a magnified partial bottom view with the inverter board at a non-inserted position;
FIG. 13 is a cross-sectional view along line xiii-xiii in FIG. 12 with the inverter board at the non-inserted position;
FIG. 14 is a cross-sectional view along line xiv-xiv in FIG. 12 with the inverter board at the non-inserted position;
FIG. 15 is a cross-sectional view along line xv-xv in FIG. 12 with the inverter board at the non-inserted position;
FIG. 16 is a magnified partial bottom view with the inverter board at the inserted position;
FIG. 17 is a cross-sectional view along line xvii-xvii in FIG. 16 with the inverter board at the inserted position;
FIG. 18 is a cross-sectional view along line xviii-xviii in FIG. 16 with the inverter board at the inserted position;
FIG. 19 is a cross-sectional view along line xix-xix in FIG. 16 with the inverter board at the inserted position;
FIG. 20 is a cross-sectional view along line xx-xx in FIG. 16;
FIG. 21 is a cross-section view along line xxi-xxi in FIG. 16;
FIG. 22 is a magnified partial bottom view illustrating positioning structures of the cover according to the second embodiment of the present invention;
FIG. 23 is a cross-sectional view along line xxiii-xxiii in FIG. 22;
FIG. 24 is a magnified partial bottom view with the inverter board at the non-inserted position;
FIG. 25 is a cross-sectional view along line xxv-xxv in FIG. 24;
FIG. 26 is a magnified partial bottom view with the inverter board at the inserted position; and
FIG. 27 is a cross-sectional view along line xxvii-xxvii in FIG. 26.

### EXPLANATION OF SYMBOLS

10: Liquid crystal display device (Display device)
11: Liquid crystal panel (Display panel)
12: Backlight unit (Lighting device)
14: Chassis
14b: Connector insertion hole
18: Cold cathode tube (Light source)
20: Inverter board (Power supply board)
21: Relay connector
22: Cover
25: Connector hole
26: Holding protrusion
27: Rib
28: Block wall portion
30: Board support portion
31: First positioning protrusion (Positioning structure, first positioning structure)
32: First positioning recess (Positioning structure, first positioning structure)
33: Second positioning part (Positioning structure, second positioning structure)
34: Board stopper
TV: Television receiver

### BEST MODE FOR CARRYING OUT THE INVENTION

### <First embodiment>

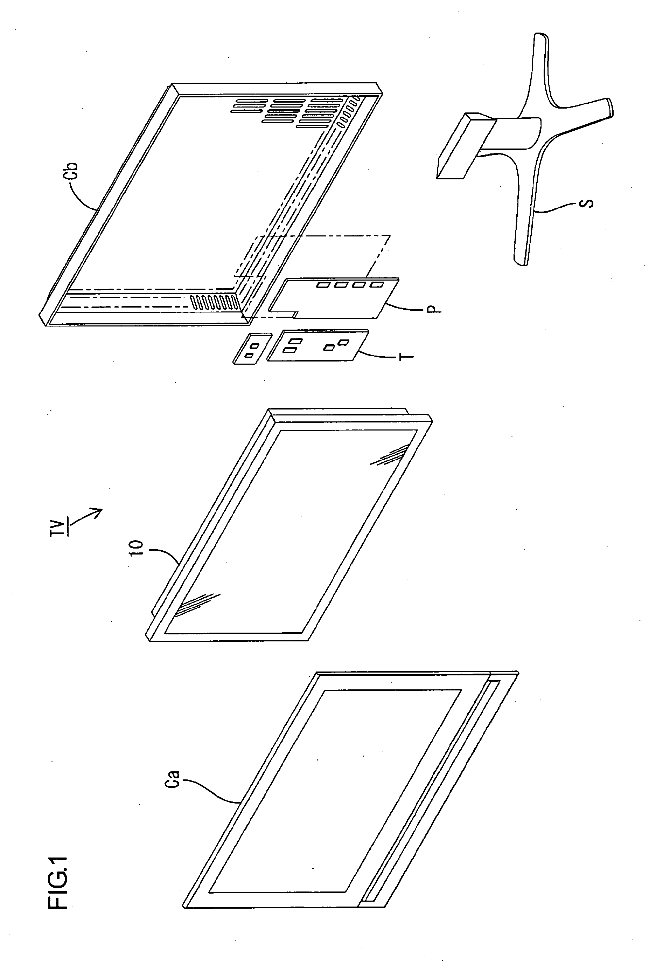

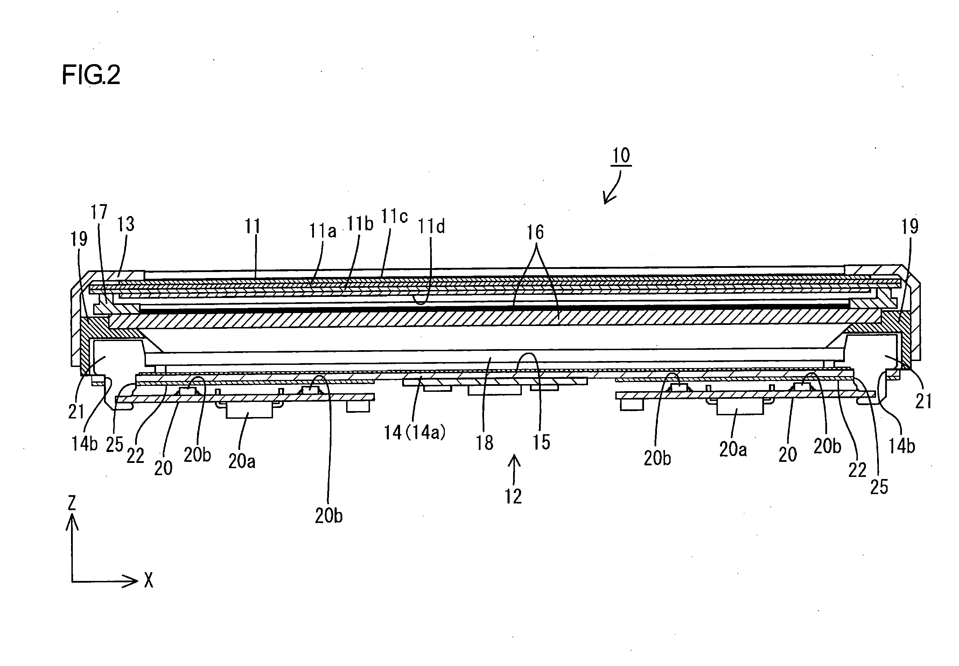

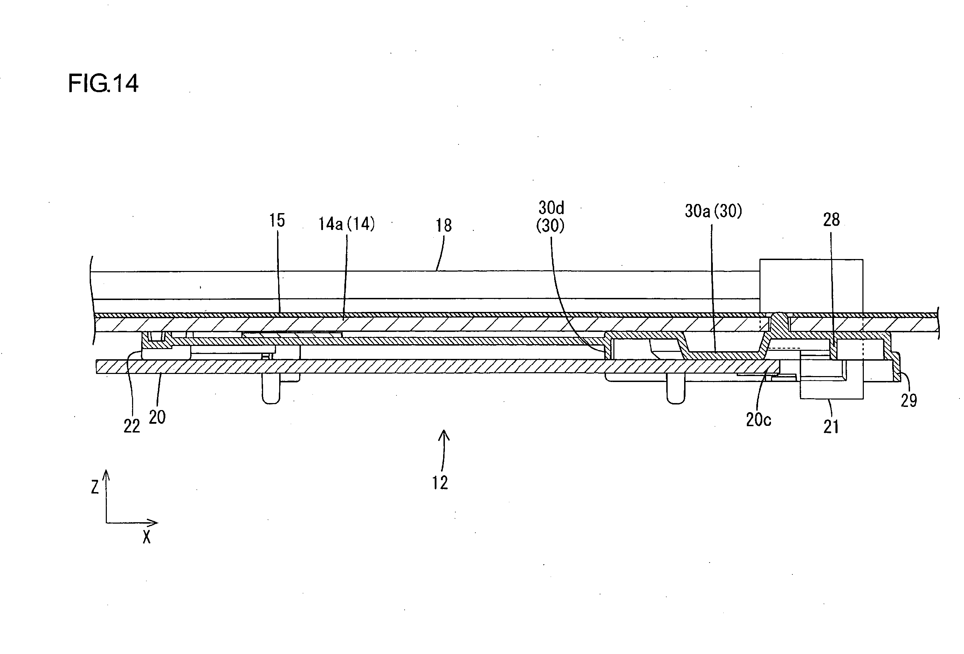

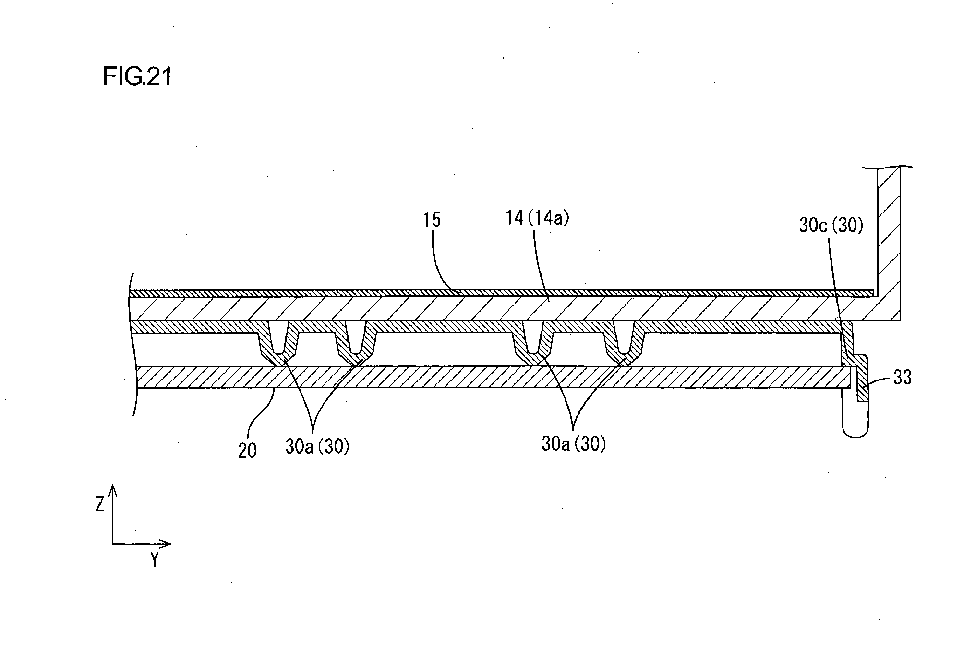

The first embodiment of the present invention will be explained with reference to FIGS. 1 to 21. In this embodiment, a liquid crystal display device 10 will be explained. X-axes, Y-axes and Z-axes are present in some drawings to indicate orientations of the liquid crystal display device 10. In FIG. 2, the upper side and the lower side correspond to the front side (the front side, the light exit side) and the rear side (the rear side, an opposite side from the light exit side), respectively.

As illustrated in FIG. 1, the television receiver TV includes the liquid crystal display device 10 (a display device), a front cabinet Ca, a rear cabinet Cb, a power source P, and a tuner T. The cabinets Ca and Cb sandwich the liquid crystal display device 10 therebetween. The liquid crystal display device 10 is housed in the cabinets Ca and Cb. The liquid crystal display device 10 has a landscape rectangular overall shape. As illustrated in FIG. 2, the liquid crystal display device 10 includes a liquid crystal panel 11, which is a display panel 11, and a backlight unit 12 (a lighting device), which is an external light source. The liquid crystal panel 11 and the backlight unit 12 are held together by a frame-shaped bezel 13.

Next, the liquid crystal panel 11 and the backlight unit 12 included in the liquid crystal display device 10 will be explained. The display panel 11 has a rectangular plan-view shape. As illustrated in FIG. 2, it includes a pair of glass substrates 11a and 11b bonded together with a predetermined gap therebetween and a liquid crystal layer (not shown) sealed between the glass substrates 11a and 11b. On the glass substrate 11a, switching components (e.g., TFTs), pixel electrodes and an alignment film are arranged. The switching components are connected to source lines and gate lines that are perpendicular to each other. The pixel electrodes are connected to the switching components. On the other glass substrate 11b, color filter having color sections of three primary colors of red (R), green (G) and blue (B) arranged in a matrix, counter electrodes and an alignment film are arranged. Image data and various kinds of control signals for displaying images are feed from a drive circuit board, which is not shown, to the source lines, the gate lines and the counter electrode. Polarizing plates 11c and 11d are arranged on outer surfaces of the glass substrates 11a and 11b, respectively.

As illustrated in FIG. 2, the backlight unit 12 is a so-called direct backlight including light sources that are arranged directly behind the liquid crystal panel 11. The backlight unit 12 includes a chassis 14, a reflection sheet 15, multiple pieces of the optical members 16, a frame 17, a plurality of cold cathode tubes (light sources), and holders 19. The chassis 14 has a box-like overall shape and an opening on the front side (the light exit side, the liquid crystal panel 11 side). The reflection sheet 15 is placed inside the chassis 14. The optical members 16 are arranged so as to cover the opening. The frame 17 holds the optical members 16. The cold cathode tubes 18 are arranged parallel to each other and housed in the chassis 14. The holders 19 cover the respective ends of the cold cathode tubes 18 so as to block light. Each holder 19 has light reflectivity. The backlight unit 12 further includes inverter boards 20 (power supply boards), relay connectors 21, and covers 22. The inverter bards 20 are arranged on the rear of the chassis 14. The relay connectors 21 are provided for relaying power supply from the inverter boards 20 to the cold cathode tubes 18. The covers 22 are arranged between the chassis 14 and the inverter boards 20.

The chassis 14 is made of metal, for instance, aluminum. The chassis 14 includes a bottom plate 14a having a rectangular plan-view shape similar to the liquid crystal panel 11. The long-side direction and the short-side direction of the bottom plate 14a match the X-axis direction and the Y-axis direction indicated in the drawings, respectively. The bottom plate 14a has connector insertion holes 14b in end areas of the long dimension thereof. The connector insertion holes 14b are through holes in which the relay connectors 21 are inserted. A plurality of them (the number required for the cold cathode tubes 18 and the relay connectors 21) are arranged along the Y-axis direction (the short sides of the bottom plate 14a) so as to be parallel to each other. The reflection sheet 15 is made of white synthetic resin having high light reflectivity. It is placed over the inner surface of the chassis 14 so as to cover substantially an entire area and configured to reflect rays of light from the cold cathode tubes 18 toward the optical members 16 (the light exit side). The reflection sheet 15 has holes continue into the connector insertion holes 14b.

Each optical member 16 has a rectangular shape similar to the bottom plate 14a of the chassis 14 or the liquid crystal panel 11. The optical members 16 include a diffuser plate, a diffuser sheet, a lens sheet and a brightness enhancement sheet arranged in this order from the rear side. They are configured to convert light emitted from each cold cathode tube, which is a linear light source, into planar light.

The frame 17 is formed in a frame shape along the outer edges of the liquid crystal panel 11 and the optical members 16. The frame 17 is arranged in front of the optical members 16. The outer edges of the optical members 16 are sandwiched between the frame 17 and the holders 19. The frame 17 supports the liquid crystal panel 11 from the rear side. The liquid crystal panel 11 is sandwiched between the frame 17 and the bezel 13 that is arranged in front of the liquid crystal panel 11.

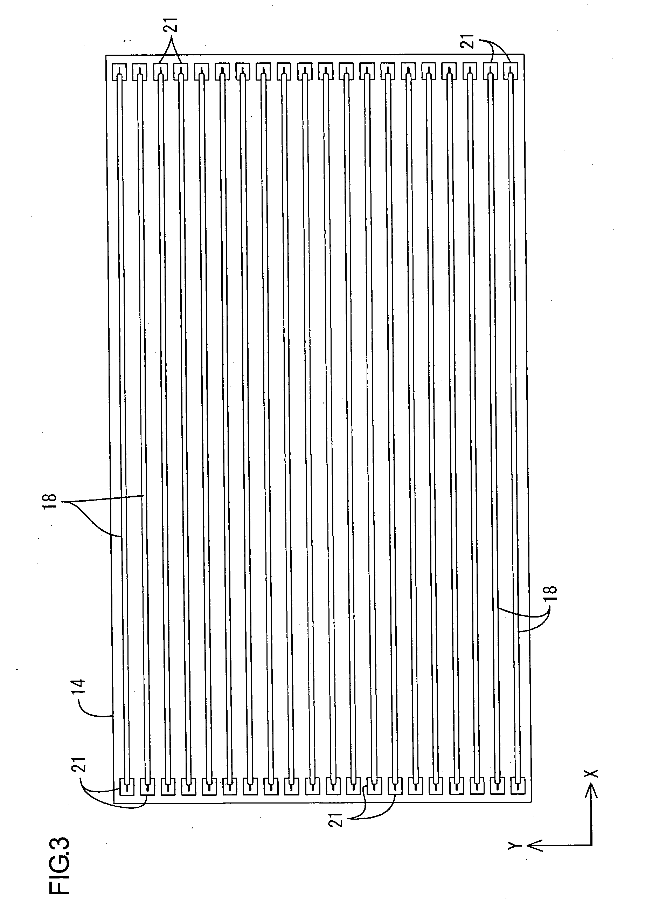

The cold cathode tubes 18 are one kind of linear light sources (tubular light sources). As illustrated in FIG. 3, the cold cathode tubes 18 are mounted inside the chassis 14 with the axial direction thereof (the X-axis direction) matches the long-side direction of the chassis 14. They are arranged such that the axes thereof are substantially parallel to each other and a predetermined distance away from each other in the short side direction of the chassis 14 (the Y-axis direction).

The cold cathode tubes 18 are one kind of discharge tubes. Each of them includes an elongated glass tube 18a, a pair of electrodes (not shown) and a pair of outer leads 18b. The glass tube 18a has a circular cross section and closed ends. The electrodes are enclosed in the glass tube 18a and located at the respective ends of the glass tube 18a. The outer leads 18b project from the respective ends of the glass tube 18a to the outside. Mercury that is a luminescent material is sealed in the glass tube 18a and a fluorescent material is applied to the inner walls of the glass tube 18a (neither the luminescent material nor the fluorescent material are shown). Each outer lead 18b is made of metal having electrical conductivity and formed in an elongated round post-like shape. It projects outward (in an opposite direction to the electrode) from the end of the glass tube 18a and extends along the axial direction (the X-axis direction). The internal end of the outer lead 18b is connected to the electrode inside the glass tube 18a and thus the outer lead 18b and the electrode are at the same potential,

Each holder 19 is made of white synthetic resin having high light reflectivity. As illustrated in FIG. 2, it extends along the short side of the chassis 14 and has a box-like shape with an opening on the rear side. The holders 19 are attached to the respective ends of the long side of the chassis 14 so as to collectively cover the respective ends of the cold cathode tubes 18 (non-light-emitting portions) arranged at the ends in a parallel layout.

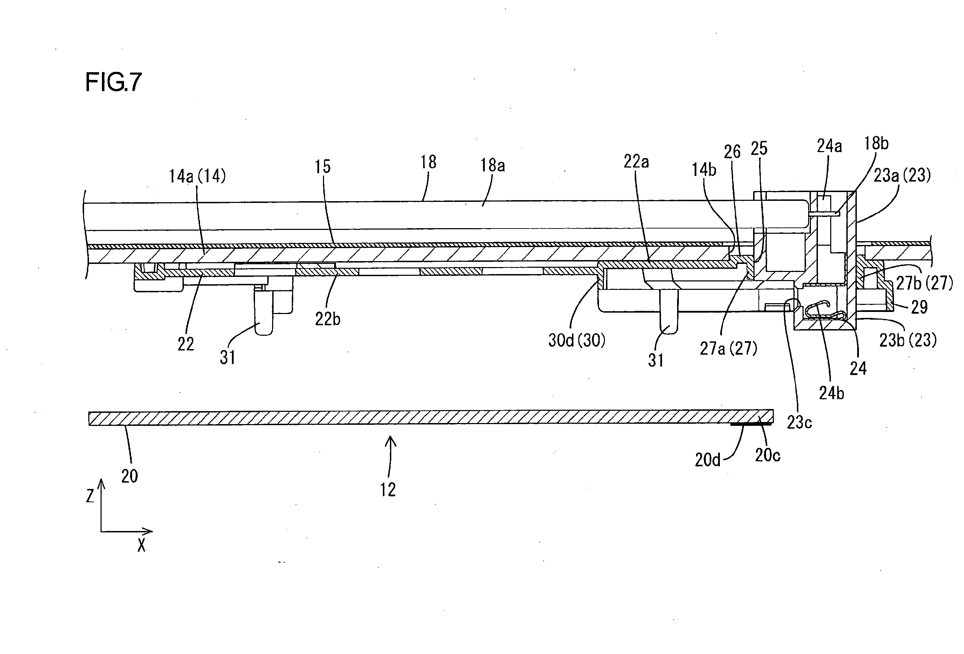

Each inverter board 20 includes a base plate made of synthetic resin (e.g., a paper phenol or a glass epoxy resin) on which wiring patterns are formed and various electronic components are mounted. Specifically, lead components 20a including power transformers and capacitors are mounted on the rear surface (the surface away from the chassis 14). On the front surface (the surface close to the chassis 14), wiring patterns (not shown) are formed and chip components 20b including resistors, diodes and capacitors are mounted. Lead of the lead components 20a are passed through the inverter board 20 so as to project from the front surface via the through holes and soldered to the wiring patterns. The chip components 20b are surface-mounted on the wiring patterns on the front surface of the inverter board 20. The inverter board 20 is connected to the power source P of the liquid crystal display device 10. It is configured to step up an input voltage from the power source P and to output a voltage higher than the input voltage. The output voltage is applied to each cold cathode tube 18. The inverter board 20 controls on-and-off of the cold cathode tubes 18. In FIGS 7 to 21, the lead components 20a and the chip components 20b are not shown.

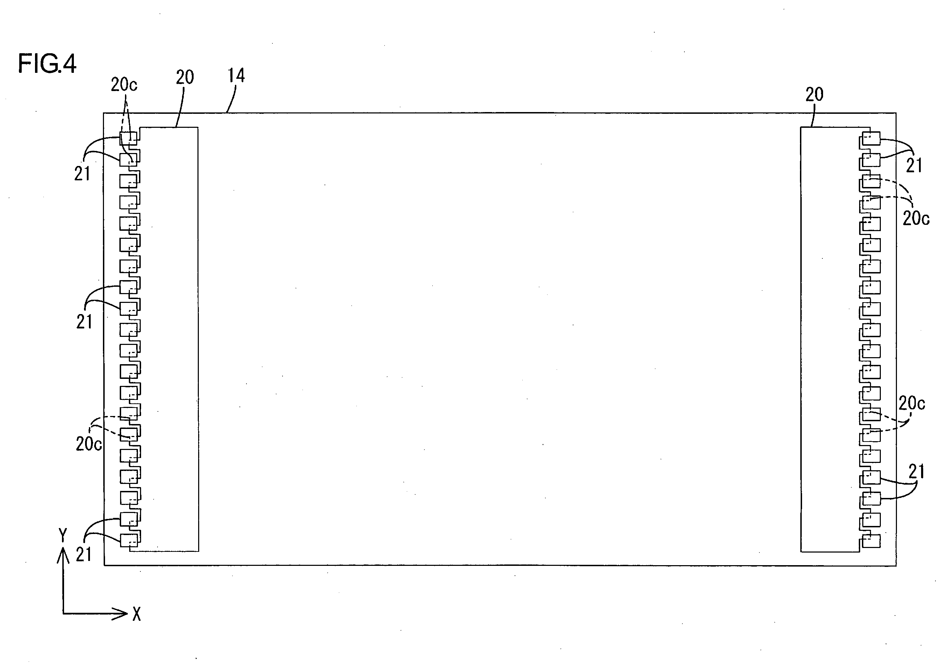

As illustrated in FIG. 4, the inverter boards 20 are mounted on the rear surface of the bottom plate 14a of the chassis 14 (the surface away from the cold cathode tubes 18). The inverter boards 20 are arranged at the respective ends of the long dimension of the bottom plate 14a so as to be symmetric. Each inverter board 20 has a rectangular plan-view shape. The inverter board 20 is placed with the board surface thereof substantially parallel to the board surface of the bottom plate 14a of the chassis 14 (the surface on the X-Y plane and perpendicular to the Z-axis that corresponds to the thickness direction of the liquid crystal display device 1) and with the long-side direction thereof aligned with the short-side direction of the bottom plate 14a (the Y-axis direction, a direction perpendicular to the axial direction of the cold cathode tube 18). The inverter boards 20 are fixed to the bottom plate 14 with screws.

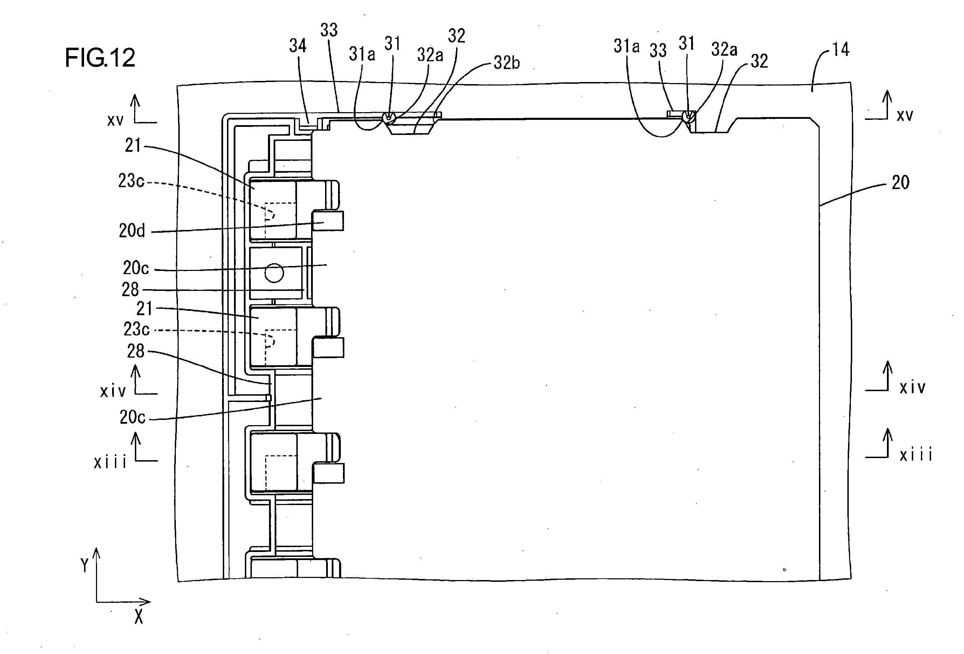

Each inverter board 20 has connector connecting portions 20c at a front end with respect to the insertion direction of the inverter board 20 to the relay connector 21. The connector connecting portions 20c are inserted in the relay connectors 21 and connected thereto. A plurality of the connector connecting portions 20c are provided along the long side of the inverter board 20 (one for each relay connector 21) by cutting out some part of the front end of the inverter board 20. Namely, the front end of the inverter board 20 is formed in a comb-like shape. As illustrated in FIG. 12, each connector connecting portion 20c is inserted in the corresponding relay connector 21. Terminals 20d extending from the wiring pattern are provided at distal ends of the respective connector connecting portion 20c. A width of each connector connecting portion 20c is larger than that of an opening of a board holding hole 23c of each relay connector 21, which will be explained later. A difference between them is substantially equal to a distance between the adjacent relay connectors 21.

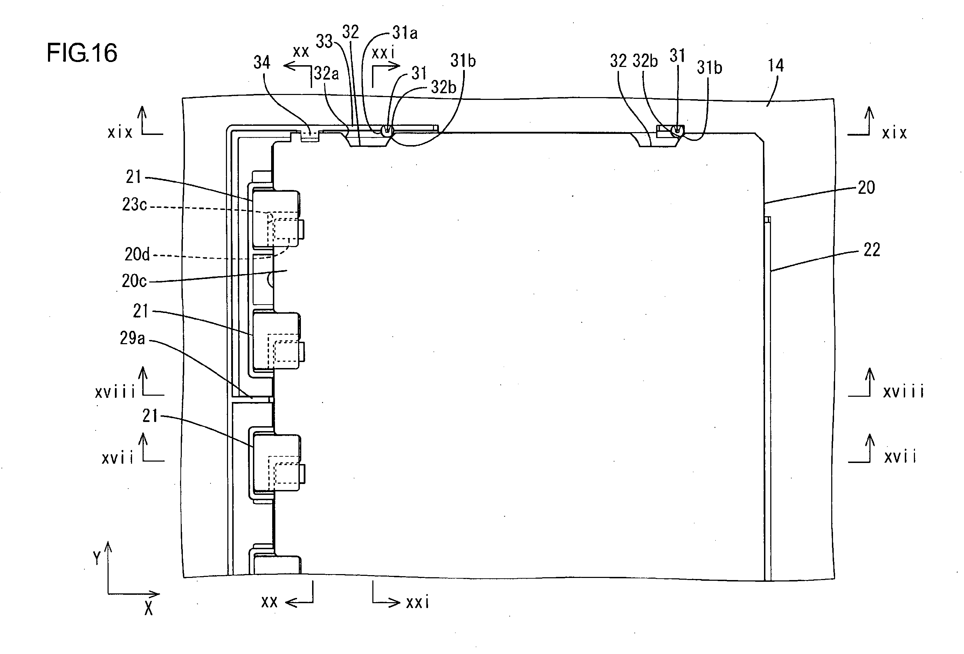

The inverter board 20 can be moved between a non-inserted position (see FIGS. 12 to 15) and an inserted position (see FIGS. 16 to 21) in the X-axis direction (a first direction, a short-side direction of the inverter board 20) along the board surface of the inverter board 20. At the non-inserted position, the connector connecting portions 20c are removed from the relay connectors 21 and the inverter board 20 is held a predetermined distance away from the bottom plate 14a of the chassis 14 so as to face the bottom plate 14a. At the inserted position, the connector connecting portions 20c are inserted in the relay connectors 21 and the inverter board 20 is held the predetermined distance away from the bottom plate 14a in the same manner as the non-inserted position. Specifically, as illustrated in FIGS. 12 to 15, the connector connecting portions 20c are positioned a predetermined distance from the relay connectors 21 in the X-axis direction and not in contact with terminal fixtures 24 of the relay connectors 21 at the non-inserted position. As illustrated in FIGS. 16 to 21, the connector connecting portions 20c are inserted in the relay connectors 21 and the terminals 20d are in contact with the terminal fixtures 24 of the relay connectors 21 at the inserted position. The inverter board 20 can be moved between the non-inserted position and the inserted position in a substantially horizontal direction along the X-axis direction. A direction from the non-inserted position to the inserted position is referred to as an insertion direction, and a direction from the inserted position to the removal position is referred to as a removal direction. A direction toward the right in the X-axis direction in FIGS. 7-9, 13-15, and 17-19 corresponds to the insertion direction, and a direction toward the left in the X-axis direction in those drawings corresponds to the removal direction. In the following descriptions about the insertion direction and the removal direction of each inverter board 20 to or from the relay connectors 21, the left inverter board 20 and the left relay connectors 21 in FIG. 4 are referred. In descriptions before or after the descriptions, the right side and the left side in the X-axis direction in FIGS. 7-9, 13-15, and 17-19 are referred to as the front and the rear, respectively.

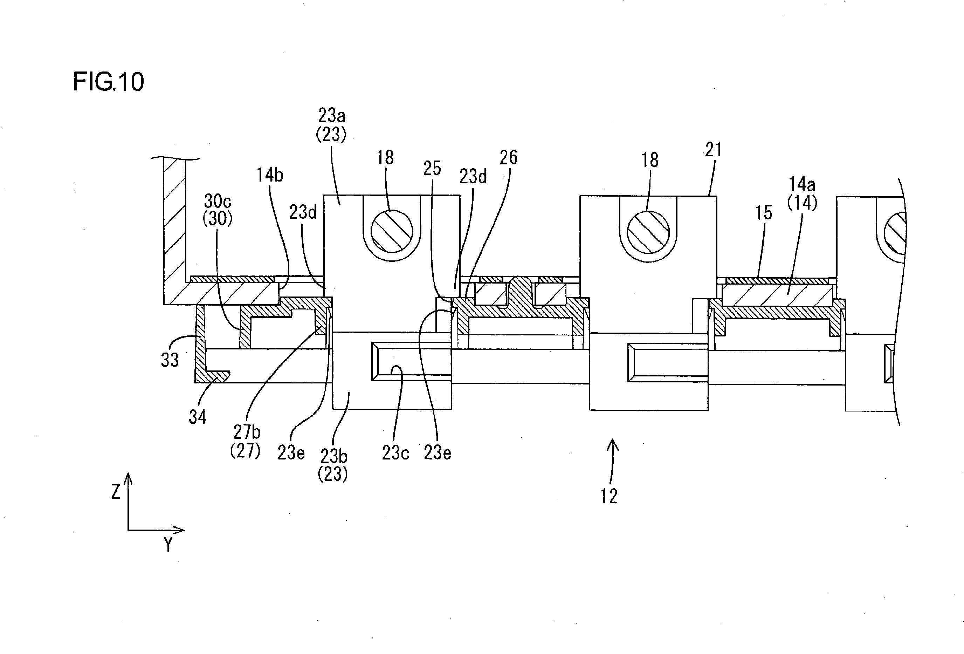

Next, the relay connectors 21 will be explained. As illustrated in FIG. 7, each relay connector 21 includes a housing 23 and the terminal fixture 24. The housing 23 is made of synthetic resin having insulation properties and an overall shape thereof is a block-like shape. The terminal fixture 24 is housed in the housing 23. Each relay connector 21 is passed through the bottom plate 14a of the chassis 14 and a cover 22, which will be explained later, and mounted. A part of the housing 23 inside the chassis 14 is a light source holding portion 23a that holds the end of the cold cathode tube 18. A part of the housing 23 outside the chassis 14 is a board holding portion 23b that holds the connector connecting portion 20c of the inverter board 20. The light source holding portion 23a has a round groove corresponding to a shape of the end of the cold cathode tube 18 (see FIG. 10). The board holding portion 23b has the board holding hole 23c that extends along the X-axis direction and the Y-axis direction. The board holding hole 23c opens to the rear (toward the inverter board 20) and to the right in FIG. 10. As illustrated in FIG. 10, the housing 23 is directly held by the cover 22 mounted to the chassis 14. Specifically, the light source holding portion 23a has a larger Y-axis dimension than that of the board holding portion 23b, and a wide portion 23d is held against the cover 22 from the front. The board holding portion 23b includes stoppers 23e that are held against the cover 22 from the rear.

As illustrated in FIG. 7, ends of the terminal fixtures 24 in the light source holding portions 23a are light source contact portions 24a that are in contact with the outer leads 18b of the cold cathode tubes 18. Ends of the terminal fixtures 24 in the board holding portions 23b are board contact portions 24b that are in contact with the terminals 20d of the connector connecting portions 20c. Each light source contact portion 24a and each board contact portion 24b have resilience and thus are elastically in contact with the outer lead 18b and the terminal 20d, respectively. An output voltage of the inverter board 20 is applied to the outer leads 18b and the terminals 20d via the relay connectors 21.

As illustrated in FIG. 4, the relay connectors 21 are arranged in parts of the chassis 14 corresponding to the ends of the cold cathode tubes 18. Namely, they are arranged ends of the long dimension of the bottom plate 14a in pairs. Moreover, a plurality of them (corresponding to the number of the cold cathode tubes 18) are arranged along the short sides of the bottom plate 14a (along the Y-axis direction, an arrangement direction in which the cold cathode tubes 18 are arranged). Arrangement intervals of the relay connectors 21 are substantially equal to arrangement intervals of the cold cathode tubes 18. The Y-axis positions of the relay connectors 21 are substantially aligned with those of the cold cathode tubes 18.

Next, the covers 22 will be explained. Each cover 22 is made of synthetic resin having insulation properties. As illustrated in FIG. 2, the cover 22 is placed between the bottom plate 14a of the chassis 14 and the inverter board 20 (i.e., sandwiched therebetween). It protects the wiring patterns and the chip components 20b on the inverter board 20 from directly touching the bottom plate 14a. The covers 22 are mounted to the rear surface of the bottom plate 14a of the chassis 14 (the surface away from the cold cathode tubes 18) at the ends of the long dimension of the bottom plate 14a in pairs. They cover the areas of the bottom plate 14a in which the relay connectors 21 are arranged.

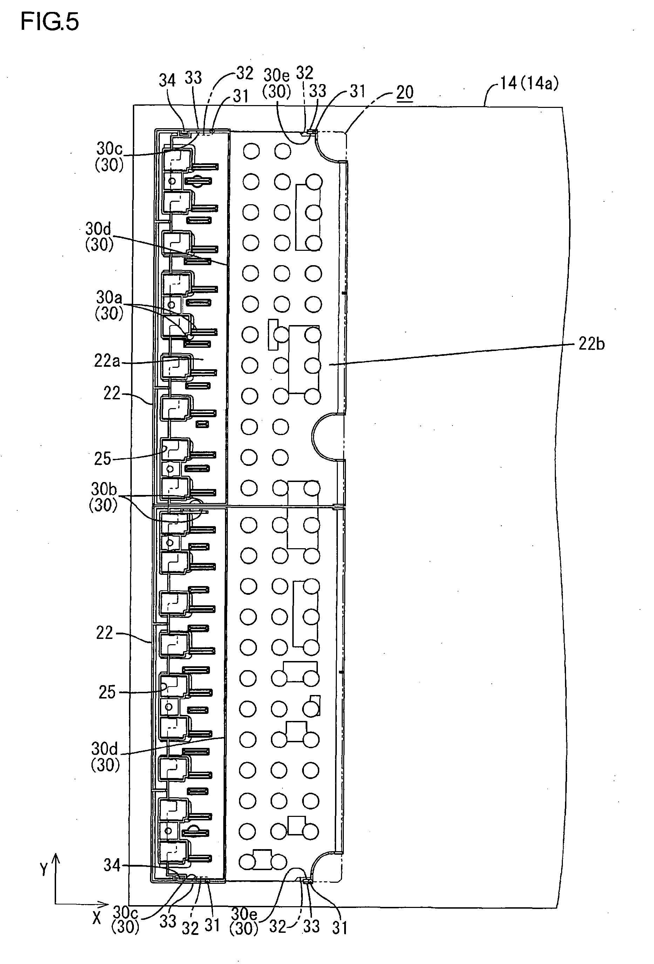

Specifically, as illustrated in FIG. 5, each cover 22 has a rectangular plan-view shape. The covers 22 are arranged along the Y-axis direction and parallel to each other. The long-side direction thereof is aligned with the short-side direction of the bottom plate 14a. The covers 22 are fixed to the respective ends of the long dimension of the bottom plate 14a with screws. The long dimension of each cover 22 is about a half of the short dimension of the chassis 14 or the long dimension of the inverter board 20. The cover 22 has a plate-like shape and the board surface thereof is parallel to the bottom plate 14a of the chassis 14 and the board surface of the inverter board 20. A part of each cover 22 relatively close to the relay connectors 21 (or the end of the chassis 14) is a front part 22a, and a part of each cover 22 relatively away from the relay connectors 21 (or close to the middle of the chassis 14) is a rear part 22b. The rear part 22b has heat dissipation holes that are through holes for dissipating heat and arranged in a matrix.

The front part 22a of each cover 22 overlaps the area of the chassis 14, in which the relay connectors 21 are arranged, in plan view. The front part 22a of the cover 22 has connector holes 25 that are through holes for receiving the relay connectors 21. Specifically, a plurality of the connector holes 25 are formed in the front part 22a along the Y-axis direction so as to parallel to each other. Each connector hole 25 is formed so as to continue to the corresponding connector insertion hole 14b of the chassis 14. As illustrated in FIGS. 7 and 10, each connector hole 25 has a plan-view size, that is, X-axis size and Y-axis size smaller than those of the connector insertion hole 14b. The plan-view size of each connector hole 25 is substantially equal to an overall size of the relay connector 21. When the relay connector 21 is passed through the connector insertion hole 14b and the connector hole 25 and mounted, edges of the connector hole 25 are sandwiched between the wide portions 23d of the light source holding portions 23a and the stoppers 23e. Namely, the relay connector 21 is directly fixed to the cover 22 and indirectly fixed to the chassis 14. Clearances in predetermined X-axis size and Y-axis size are provided between the relay connector 21 and edges of the connector insertion hole 14b of the bottom plate 14a of the chassis 14. A holding protrusion 26 is provided at the edges of each connector hole 25 of the cover 22. The holding protrusion 26 projects toward the front (toward the chassis 14) such that it is fitted in the connector insertion hole 14b. The holding protrusion 26 has a short tubular shape and closes the clearances (it is provided between the edges of the connector insertion hole 14b and the relay connector 21). The holding protrusion 26 separates the relay connector 21 from the edges of the connector insertion hole 14b to maintain proper isolation therebetween.

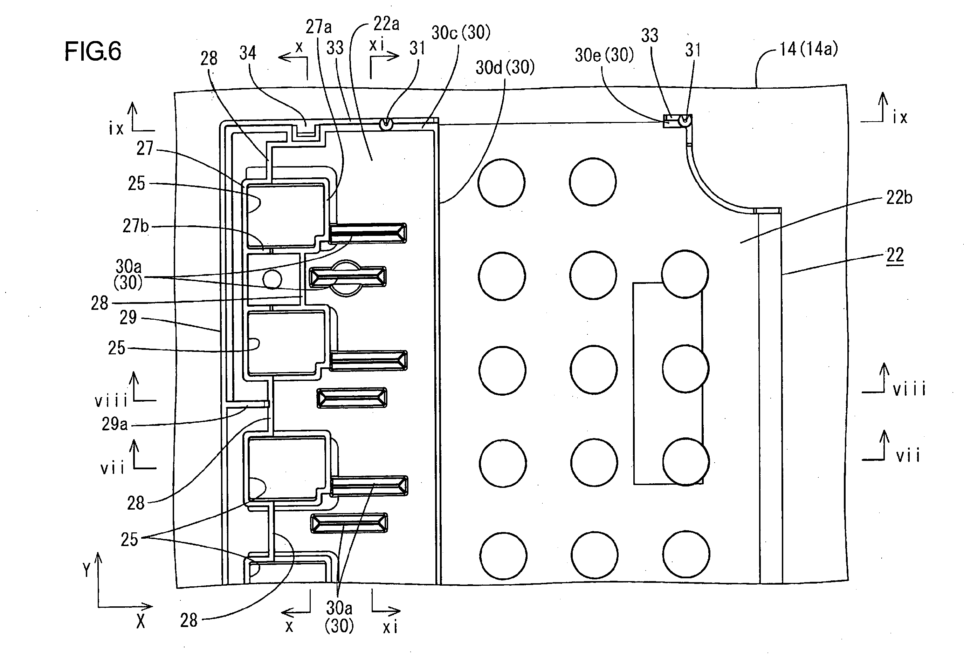

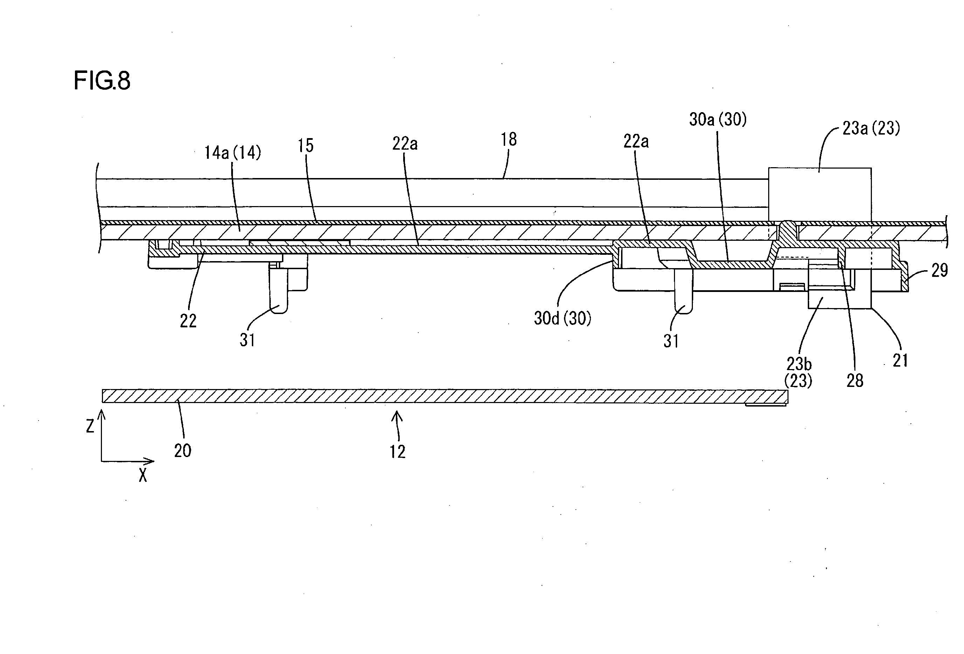

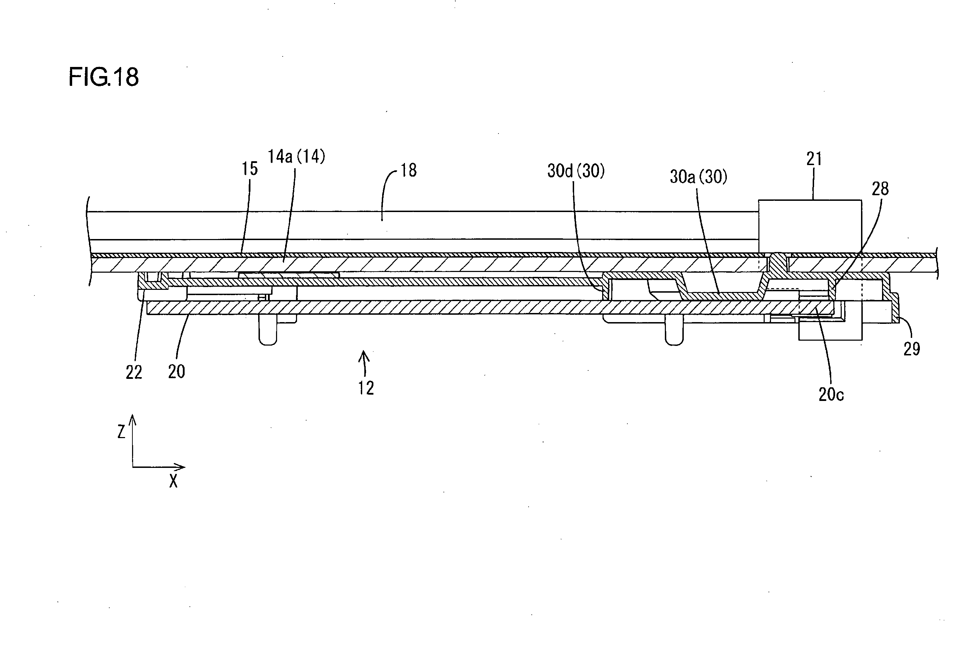

As illustrated in FIG. 6, ribs 27 project from edges of the connector holes 25 in the front part 22a of the cover 22 toward the rear (toward the inverter board 20). As illustrated in FIG. 7, each rib 27 has a short tubular shape with different heights in the front part and the rear part. The rear part is a low part 27a, the height of which is relatively low. The front part is a high part 27b, the height of which is relatively high. The height of the high part 27b is defined such that a distal end surface thereof reaches the front surface of the inverter board 20 (the surface opposite the cover 22). As illustrated in FIGS. 6 and 8, the cover 22 has block wall portions 28, each of which is formed in an area of the front part 22a between the adjacent connector holes 25 so as to project toward the rear. Each block wall portion 28 extends along the Y-axis direction and bridges the area between the adjacent connector holes 25. It is connected to the adjacent ribs 27. The block wall portion 28 has a height substantially equal to that of the high part 27b of the rib 27. Therefore, the distal end surface thereof is in contact with the front surface of the front-end portion of the connector connecting portion 20c of the inverter board 20 that is at the inserted position (see FIG. 18). With the block wall portions 28 and the relay connectors 21, spaces defined by the inverter board 20 that is at the inserted position and the cover 22 are all closed on the front side. Namely, the spaces are all closed without exception. Therefore, foreign substances are properly blocked. A front wall portion 29 projects from the front-end portion of the front part 22a of the cover 22 toward the rear and a distal end thereof is located higher than the high part 27b of the rib 27. The front wall portion 29 extends along the Y-axis direction and a plurality of extending portions 29a that extend from the front wall portion 29 to the rear. The extending portions 29a are connected to the block wall portions 28 and in contact with the front-end surface of the inverter board 20 that is at the inserted position.

As illustrated in FIGS. 5 to 11, each cover 22 has a plurality of board support portions 30 that project toward the front and support the inverter board 20 from the rear to restrict the inverter board 20 from being deformed, for example, warped. The board support portions 30 include a plurality of support projections 30a, a pair of front vertical support walls 30b and 30c, a horizontal support wall 30d and a rear vertical wall 30e. The support projections 30a are arranged adjacent to the respective connector holes 25 in the front part 22a of the cover 22. The front vertical support walls 30b and 30c are arranged at the ends of the long dimension (along the Y-axis direction) of the cover 22. The horizontal support wall 30d are arranged at the rear end of the front part 22a of the cover 22 and connected between the vertical support walls 30b and 30c. The rear vertical support wall 30e arranged at one of the ends of the long dimension of the rear part 22b of the cover 22. The support projections 30a, the front vertical support walls 30b and 30c, the horizontal support wall 30d and the rear vertical wall 30e have heights similar to those of the high part 27b of the rib 27 and the block wall portion 28. Therefore, they are in contact with the front surface of the inverter board 20.

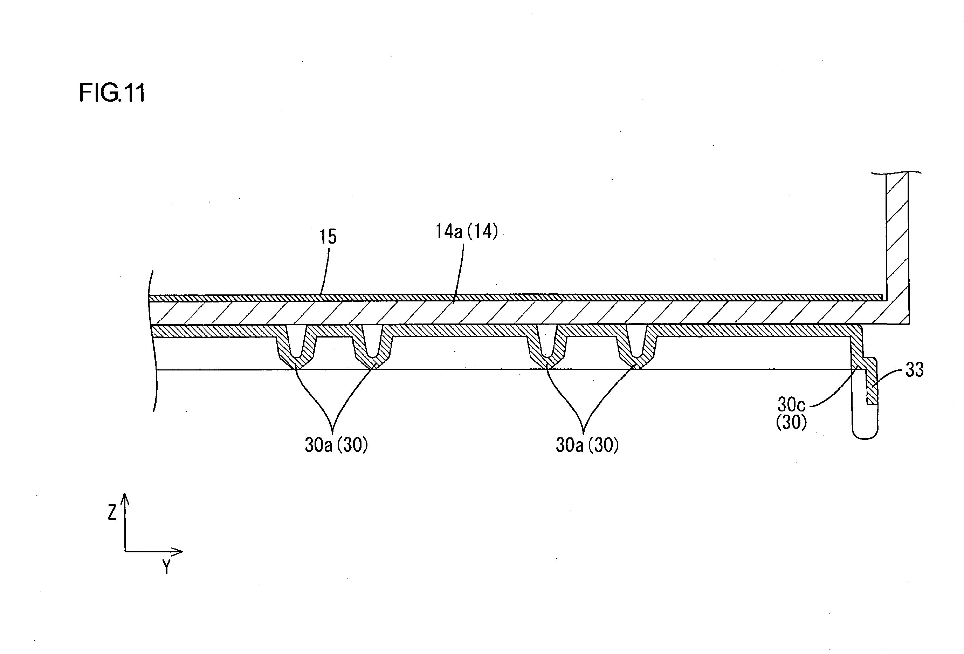

As illustrated in FIGS. 6 and 8, each support projection 30a extends along the X-axis direction (the insertion direction). A plurality of the support projections 30a are arranged along the Y-axis direction so as to be parallel to each other. For most of the connector holes 25, two support projections 30a are provided for each connector hole 25. Some of the support projections 30a are connected to the low parts 27a of the ribs 27. As illustrated in FIGS. 8 and 11, each support projection 30a is formed by projecting a part of the front part 22a of the cover 22 to the front. The outer surfaces of the support projection 30a are tapered surfaces that are tapered at two different angles. The support projection 30a supports a part of the inverter board 20 immediately rear of the connector connecting portion 20c that is inserted in the relay connector 21.

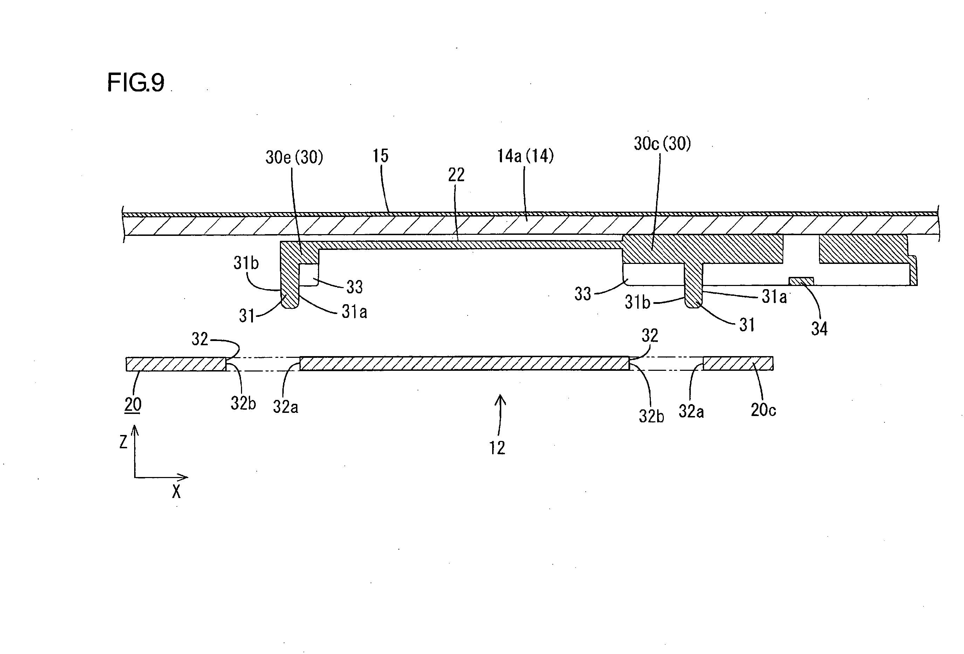

As illustrated in FIGS. 5 and 9, the front vertical support walls 30b and 30c are located at the respective ends of the long dimension of the front part 22a of the cover 22. They extend along the X-axis direction. The front vertical support walls 30b and 30c include a center vertical support wall 30b and an outer vertical support wall 30c. The center vertical support wall 30b is located closer to a center of the short dimension of the chassis 14 and the outer vertical support wall 30c is located closer to the end of the short dimension of the chassis 14. The center vertical support wall 30b supports the central area of the long dimension of the front-end portion of the inverter board 20. The outer vertical support wall 30b supports the end area of the long dimension of the front-end portion of the inverter board 20. The block wall portion 28 is connected between each front vertical support walls 30b or 30c and the adjacent rib 27. As illustrated in FIG. 5, the horizontal support wall 30d extends along the Y-axis direction. It is arranged in a location more to the rear than the support projections 30a and supports the inverter board 20 at the location from the rear.

As illustrated in FIGS. 6 and 9, the rear vertical support wall 30e is provided at the end of the long dimension of the rear part 22b of the cover 22. Namely, it is provided only at the end corresponding to the end of the short dimension of the chassis 14 when the cover 22 is mounted to the chassis 14. It extends along the X-axis direction. The rear support wall 30e is arranged at a location immediately before a rectangular cutout in the rear part 22b of the cover 22 with a sufficient distance away from the outer vertical support wall 30c located on the front. The rear vertical support wall 30e supports the end of the long dimension of the rear-end portion of the inverter board 20. Namely, the ends of the long dimension of the inverter board 20 are supported by the outer vertical support wall 30c and the rear vertical support wall 30e at two points away from each other in the front-rear direction.

As illustrated in FIG. 5, the support projection 30a, the center vertical support wall 30b and horizontal support wall 30d of the board support portions 30 form a center support portion. The center support portion supports the middle section of the inverter board 20 around the middle of the long dimension (the Y-axis dimension along the second direction perpendicular to the first direction). The end vertical support wall 30c and the rear vertical support wall 30e form an end support portion of the board support portion 30. The end support portion supports the end section of the inverter board 20 around the end of the long dimension. The board support portion 30 is arranged so as to support the inverter board 20 when the inverter board 20 is at the non-inserted position or at the inserted position. Moreover, the board support portion 30 supports the inverter board 20 while the inverter board 20 is being moved between those two positions.

As described above, the inverter board 20 is moved from the non-inserted position to the inserted position while the Z-axis position thereof relative to the chassis 14 and the cover 22 is maintained and connected to the relay connectors 21. On the surface of the inverter board 20 opposed to the chassis 14 and the cover 22, the chip components 20b are mounted. Moreover, the leads of the lead components 20a project from the surface. During setting of the inverter board 20 to the non-inserted position, the inverter board 20 may be displaced from proper X-axis position and Y-axis position relative to the chassis 14 and the cover 22. If the displacement occurs, the chip components 20b and the leads may hit parts of the chassis 14 or the cover 22. Furthermore, if the inverter board 20 is displaced from the proper non-inserted position, the same problem may occur when it is moved from the displaced position to the inserted position.

In this embodiment, the cover 22 and the inverter board 20 mounted to the chassis 14 have positioning structures for positioning the cover 22 and the inverter board 20 relative to each other along the board surface directions thereof (the X-axis direction and the Y-axis direction). Two kinds of the positioning structures are provided for different directions in which the inverter board 20 is positioned. The positioning structures for positioning the cover 22 and the inverter board 20 in the X-axis direction (the first direction) along the insertion direction of the inverter board 20 are the first positioning structures. The positioning structures for positioning them in the Y-axis direction (the second direction) perpendicular to the X-axis direction are the second positioning structures. The first positioning structures and the second positioning structures are provided at the ends of the Y-axis dimensions of the chassis 14 and the inverter board 20.

The first positioning structures include the first positioning protrusions 31 and the first positioning recesses 32. The first positioning protrusions 31 are provided on the cover 22 that is located on the chassis 14 side. The first positioning recesses 32 are provided in the inverter board 20 for receiving the first positioning protrusions 31. As illustrated in FIGS. 5 and 9, the first positioning protrusions 31 protrude from the end vertical support walls 30c and the rear vertical support walls 30e of the cover 22 toward the rear (toward the inverter board 20). Two pairs of first positioning protrusions 31 and a total of four first positioning protrusions 31 are provided. The first positioning protrusions 31 in each pair are arranged at the respective ends of the short dimension of the chassis 14 (along the Y-axis direction) so as to be away from each other in the front-rear direction. As illustrated in FIGS. 6 and 9, the front first positioning protrusions 31 are located slightly more to the front than the rear ends of the end vertical support walls 30c and more to the rear than the connector holes 25. The rear first positioning protrusions 31 are located at the rear ends of the rear vertical walls 30e. Each first positioning protrusion 31 has a columnar shape and the height larger than the thickness of the inverter board 20. As illustrated in FIG. 12, the first positioning recesses 32 are formed by cutting parts of the short edges (at the ends of the Y-axis dimension) of the inverter board 20. Each first positioning recess 32 extends through the inverter board 20 in the thickness direction and opens outward. Two pairs of first positioning recesses 32 and a total of four first recesses 32 are provided so as to correspond the first positioning protrusions 31. The first positioning recesses 32 in each pair are formed at the respective ends of the long dimension of the inverter board 20 so as to be away from each other in the front-rear direction. Two of them are located slightly more to the rear than the front end of the inverter board 20 and the other two of them are located slightly more to the front than the rear end of the inverter board 20. Each first positioning recess 32 is in a trapezoidal plan-view shape and the width thereof (the X-axis dimension) increases toward the opening-end corresponding to the outer edge of the Y-axis dimension. A front edge 32a and the rear edge 32b of each first positioning recess 32 are tapered.

Furthermore, each first positioning recess 32 has the X-axis dimension larger than the diameter of the first positioning protrusion 31. When the first positioning protrusions 31 is inserted in the first positioning recess 32, clearances are provided in the X-axis direction between the first position protrusions 31 and the edges of the first positioning recess 32. The first positioning protrusion 31 can be moved relative to the first positioning recess 32 in the front-rear direction with in a range corresponding to the clearances. The first positioning protrusion 31 hits the front edge 32a or the rear edge 32b of the first positioning recess 32 and thus the relative movement of the first positioning protrusion 31 is restricted. When the inverter board 20 is at the non-inserted position, the front end portions 31a of the first positioning protrusions 31 are in contact with the front edges 32a of the respective first positioning recesses 32 as illustrated in FIG. 12. Therefore, the inverter board 20 does not move from the non-inserted position to the rear. When the inverter board 20 is at the inserted position, the rear end portion 31b of the first positioning protrusions 31 are in contact with the rear edges of the respective first positioning recesses 32 as illustrated in FIG. 16. Therefore, the inverter board 20 does not move from the inserted position to the front. The clearance between each first positioning protrusion 31 and the corresponding first positioning recess 32 is substantially equal to the distance between the non-inserted position and the inserted position of the inverter board 20.

Next, the second positioning structures will be explained in detail. The second positioning structures include the second positioning parts 33. As illustrated in FIGS. 5 and 9, the second positioning parts 33 project from the outer edges of he end vertical support walls 30c and the rear vertical support walls e of the cover 22 to the rear, respectively. Two pairs of second positioning parts 33 and a total of four second positioning parts 33 are provided. The second positioning parts 33 in each pair are arranged at the respective ends of the short dimension of the chassis 14 (along the Y-axis direction) so as to be away from each other in the front-rear direction. As illustrated in FIGS. 6 and 9, each second positioning part 33 is a vertical wall parallel to the end vertical support wall 30c and the rear vertical support wall 30e. The thickness of the second positioning part 33 is about a half of the thickness of the end vertical support wall 30c or the rear vertical support wall 30e. The second positioning part 33 is connected to a base of projection of the first protrusion 31. As illustrated in FIG. 12 and 16, the inner walls of the second positioning parts 33 are in contact with the side surfaces 20e of the inverter board 20 supported by the end vertical support walls 30c and the rear vertical support walls 30e. A distance between the inner walls of the second positioning parts 33 opposite to each other and located at the ends of the Y-axis dimension of the chassis 14 is substantially equal to the long dimension of the inverter board 20 as illustrated in FIG. 5. Therefore, the inverter board 20 is not displaced from the non-inserted position or the inserted position in the Y-axis direction. During the movement of the invert board 20 from the non-inserted position to the inserted position, the side surfaces 20e of the inverter board 20 slide over the inner walls of the second positioning parts 33. Namely, the movement of the inverter board 20 is guided. The height of each second positioning part 33 is smaller than that of the first positioning protrusion 31.

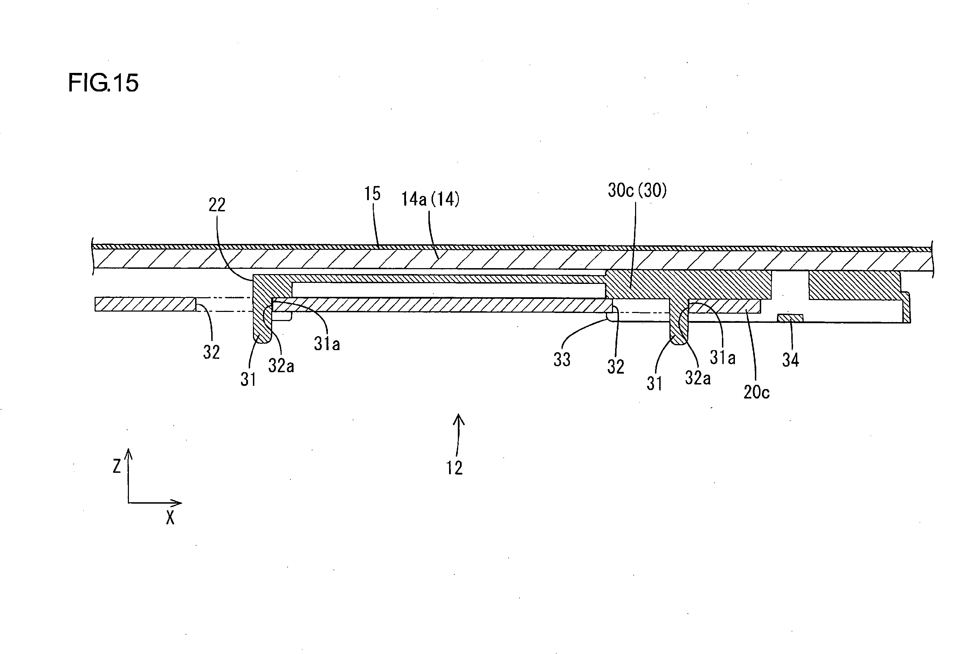

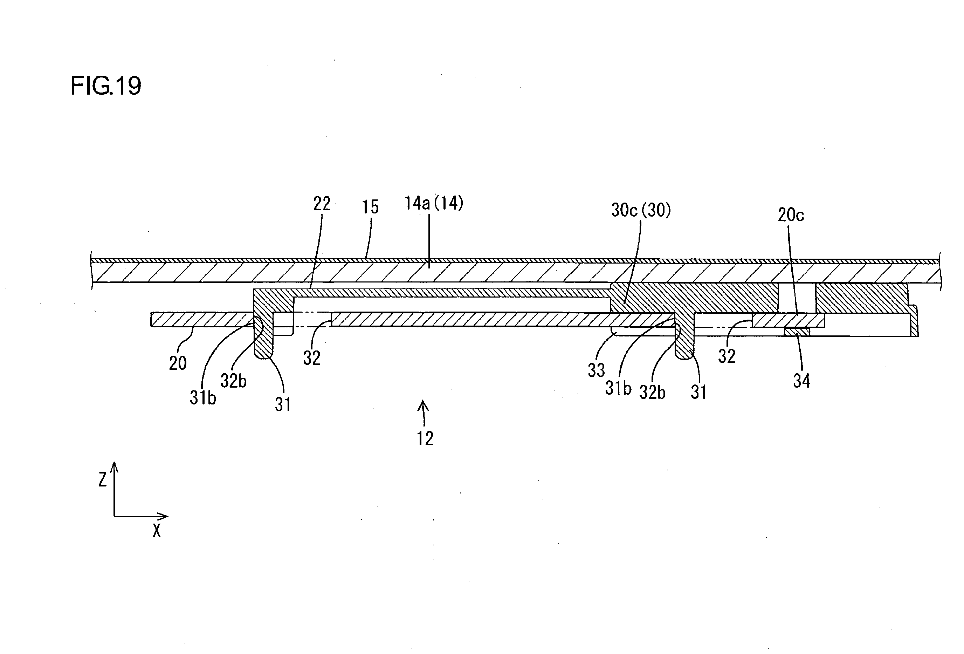

Each cover 22 in this embodiment includes board stoppers 34 in addition to the above positioning structures. The board stoppers 34 hold the inverter board 20 from the rear (from a side opposite from the chassis 14). As illustrated in FIGS. 6, 9 and 10, each board stopper 34 projects inward from the second positioning part 33 of the cover 22 along the Y-axis direction (i.e., toward the middle of the short dimension of the chassis 14). The board stopper 34 is arranged near the front-end portion of the second positioning part 33, specifically, in an area that overlaps the connector hole 25 in the X-axis direction. The inner surface of the board stopper 34 is in contact with the rear surface of the inverter board 20. The board stopper 34 is not in contact with the inverter board 20 when the inverter board 20 is at the non-inserted position (see FIG. 15). It is in contact with front-end portion of the inverter board 20 when the inverter board 20 is at the inserted position (see FIG. 19). With this configuration, the inverter board 20 at the inserted position is less likely to deform in a direction that crosses the board surface of the inverter board 20.

This embodiment has the above configuration. Next, functions of this embodiment will be explained. The liquid crystal panel 11 and the backlight unit 12 prepared separately are fixed together by the bezel 13, and the liquid crystal display device having the above configuration is prepared. Assembly of the backlight unit 12 will be explained.

In the assembly of the backlight unit 12, the reflection sheet 15 is placed over the front inner surface of the chassis 14 and the covers 22 are attached to the rear outer surface of the chassis 14. The relay connectors 21 are mounted to the chassis14 from the inner side of the chassis 14 and fitted in the connector holes of the covers 22. The relay connectors 21 are held by the covers 22. Then, the cold cathode tubes 18 are installed in the chassis 14. The outer leads 18b at the ends thereof are inserted in the light source holding portions 23a of the relay connectors 21 so as to elastically in contact with the light source contacts 24a of the terminal fixtures 24. The holders 19, the optical members 16 and the frame 17 are mounted to the chassis 14 from the front (see FIG. 2).

On the rear side of the chassis 14, the inverter boards 20 are mounted to the chassis 14 and the covers 22. The inverter boards 20 are moved close to the chassis 14 and the covers 22 from the non-inserted positions illustrated in FIGS. 7 to 9 with the surfaces on which the wiring patterns and the chip components 20b are provided on the front side. The inverter boards 20 are moved from the rear side toward the chassis and the covers 22 along the Z-axis direction until they are set at the non-inserted positions illustrated in FIGS. 12 to 15. By positioning the first positioning protrusions 31 of each cover 22 to the respective first positioning recesses 32 at the ends of the Y-axis dimension of each inverter board 20, the inverter board 20 is properly set to the inserted position with respect to the X-axis (see FIG. 5). The position of inverter board 20 is adjusted with respect to the X-axis direction such that the front-end portions 31a of the first positioning protrusions 31 of the cover 22 on the chassis 14 side are in contact with the respective front-end portions 32 of the first positioning recesses 32 arranged near the four corners of each inverter board 20. As a result, the inverter board 20 is properly set at the non-inserted position with respect to the X-axis direction. The first positioning structures are arranged at two locations away from each other in the front-rear direction. Therefore, the first positioning protrusions 31 are easily positioned relative to the first positioning recesses 32 when the relative positions therebetween are visually confirmed.

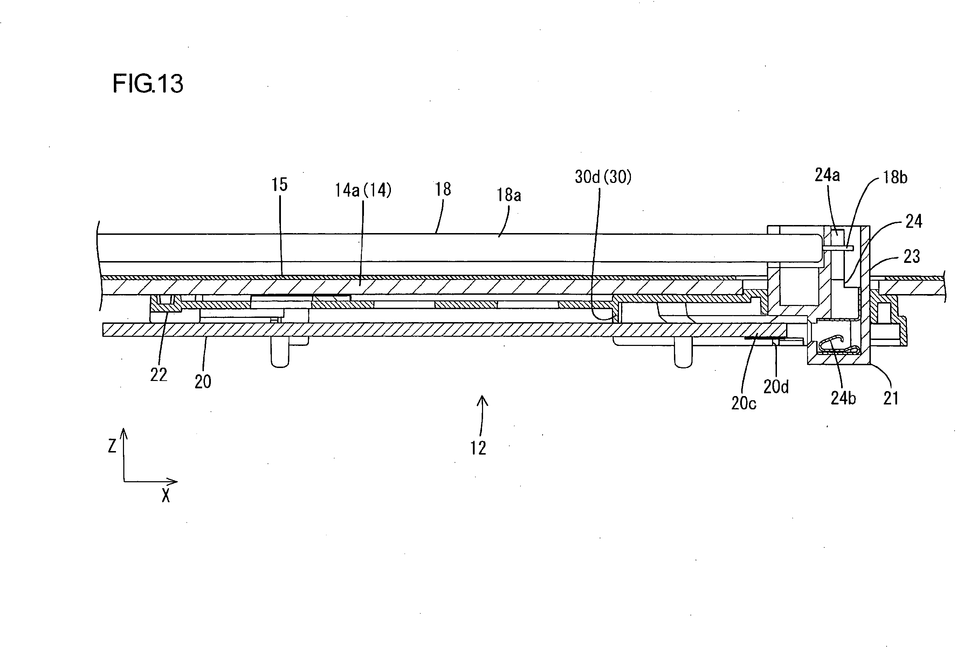

When the inverter board 20 is moved from the removal position to the non-inserted position, the side surfaces 20e of the inverter board 20 are positioned to the second positioning parts 33 of the cover 22 as illustrated in FIG. 12. As a result, the inverter board 20 is properly set at the non-inserted position with respect to the Y-axis direction. Specifically, the position of the inverter board 20 is adjusted with respect to the Y-axis direction such that the outer surfaces of the inverter board 20 near the respective corners are in contact with the inner walls of the second positioning parts 33 of the cover 22 on the chassis 14 side. As a result, the inverter board 20 is properly moved to the non-inserted position with respect to the Y-axis direction (see FIG. 5). As illustrated in FIGS. 13 to 15, the front surface of the inverter board 20 is in contact with the board support portions 30 (the support protrusions 30a, the vertical support walls 30b, 30c, 30e and the horizontal support walls 30d) when the inverter board 20 is at the non-inserted position. Namely, the Z-axis position of the inverter board 20 relative to the chassis 14 and the cover 33 is defined and a deformation such as a warp is less likely to occur.

The inverter board 20 is two-dimensionally positioned to proper X-axis position and Y-axis position when it is set at the non-inserted position. During the movement of the inverter board 20, the chip components 20b and the leads of the lead components 20a project toward the chassis 14 or the cover 22 are less likely to hit parts of the chassis 14 or the cover 22 (e.g., screws for fixing the inverter board 20).

Next, each inverter board 20 is moved from the non-inserted position to the inserted position. When the inverter board 20 is moved from the non-inserted position to the front along the X-axis direction, the connector connecting portions 20c are board holding holes 23c of the board holding portions 23 of the relay connectors 21. When the inverter board 20 is moved to the inserted position, the board contacts 24b of the terminal fixtures 24 of the relay connectors 21 are elastically in contact with the terminals of the connector connecting portions 20c as illustrated in FIGS. 16 to 21. The inverter board 20 is electrically connected to the cold cathode tubes 18 via the relay connectors 21 and power supply to the cold cathode tubes 18 is established.

During the movement of the inverter board 20 in the non-inserted position illustrated in FIG. 12 to the inserted position illustrated in FIG. 16, the first positioning protrusions 31 inserted in the first positioning recesses 32 move relatively in the X-axis direction within a range corresponding to the clearances. During the movement, the side surfaces 20e of the inverter board 20 slide over the second positioning parts 33. The inverter board 20 moves linearly along the X-axis direction without being tilted during the movement guided by the second positioning parts 33. When the inverter board 20 is set at the inserted position, the rear-end portions 31b of the first positioning protrusions 31 are in contact with the rear-edge portions 32b of the first positioning recesses 32 as illustrated in FIGS. 16 and 19. Therefore, the inverter board 20 is less likely to be pushed further to the front. During the movement of the inverter board 20 from the non-inserted position to the inserted position, the inverter board 20 is positioned relative to the X-axis direction and the Y-axis direction. Therefore, the chip components 20b and the leads of the lead components 20a on the inverter board 20 are less likely to hit the parts of the chassis 14 and the cover 22.

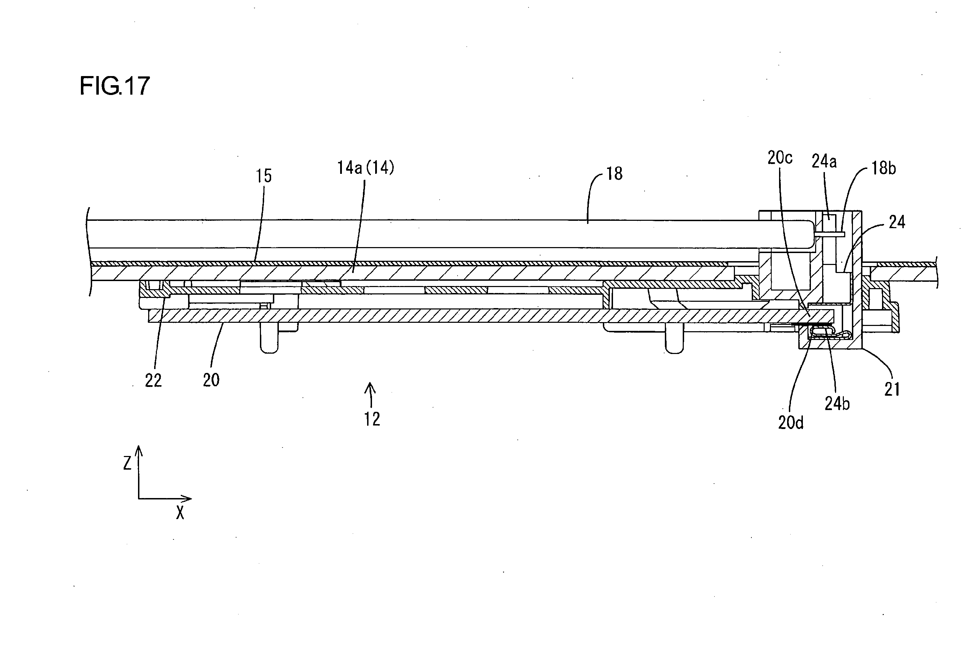

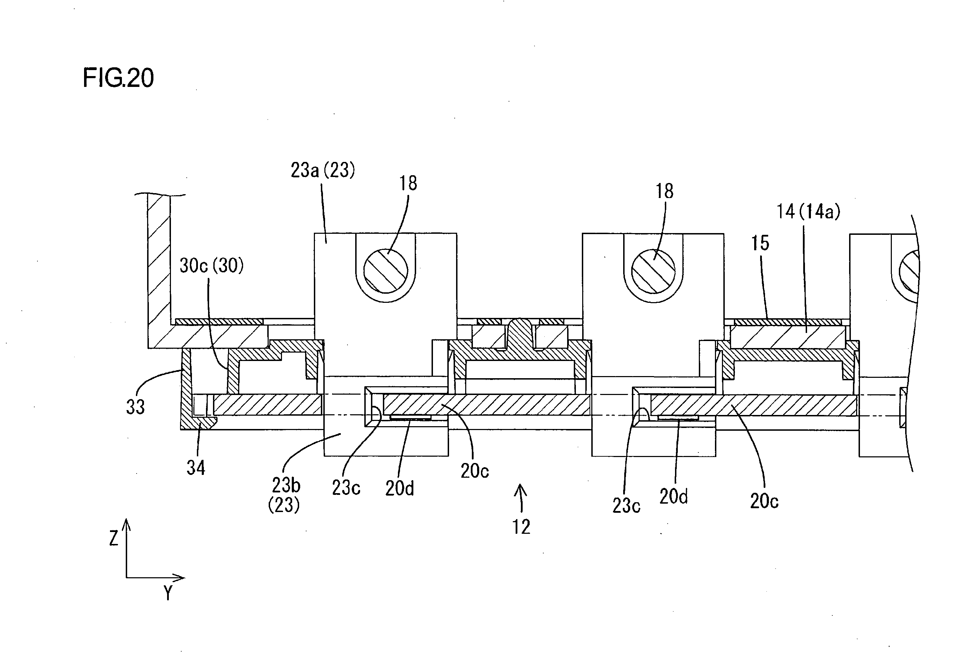

When the inverter board 20 is set at the inserted position, the front-end portion thereof is held by the board stoppers 34 from the rear as illustrated in FIGS. 19 and 20. Furthermore, the board support portions 30 (the support protrusions 30a, the front vertical support walls 30b and 30c, the horizontal support walls 30d) are in contact with the front surface of the inverter board 20 as illustrated in FIGS. 17 to 21. A warp of the inverter board 20 in the Z-axis direction, that is, the direction perpendicular to the board surface thereof, or a backlash of the inverter board 20 is effectively reduced. When the inverter board 20 is at the inserted position, the block wall portions 28 of the cover 22 are brought into contact with parts of the connector connecting portions 20c of the inverter board 20 outside the relay connectors 21 from the front as illustrated in FIGS. 16 and 18. As a result, spaces between the adjacent relay connectors are closed. Namely, the spaces defined by the inverter board 20 and the cover 22 are less likely to have openings on the front because of the block wall portions 28 and the relay connectors 21. As a result, they remain closed. Therefore, foreign substances (including insects or other living creatures) are less likely to enter spaces surrounded by the inverter board 20 and the cover 22 from the front. Therefore, the connections between the relay connectors 21 and the inverter board 20 are less likely to be adversely affected.

When the inverter board 20 is moved from the removal position to the non-inserted position, the position thereof changes between the non-inserted position and the inserted position even when the inverter board 20 is mounted at a position more to the front than the non-inserted position. Therefore, the components of the inverter board 20 are less likely to hit the parts of the chassis 14 or the cover 22.

As described above, the backlight unit 12 in this embodiment includes the cold cathode tubes 18, the chassis 14, the inverter boards 20 and the relay connectors 21. The chassis 14 houses the cold cathode tubes 18. The inverter boards 20 are arranged on the opposite side of the chassis 14 from the cold cathode tubes 18 and configured to supply drive power to the cold cathode tubes 18. The relay connectors 21 are mounted to the chassis 14 and configured to relay power supply from the inverter boards 20 to the cold cathode tubes 18. Each inverter board 20 is movable from the non-inserted position to the inserted position in one direction along the board surface thereof. At the non-inserted position, the inverter board 20 is not inserted in the relay connecters 21. At the inserted position, the inverter board 20 is inserted in the relay connectors 21. The positioning structures are provided for each inverter board 20 to position the inverter board 20 in the non-inserted position relative to the chassis 14 in at least one direction along the board surface.

During connection of the inverter boards 20 to the relay connectors 21, each inverter board 20 is set at the non-inserted position on the opposite side of the chassis 14 from the cold cathode tubes 18. Then, it is moved in the direction along the board surface thereof to the inserted position. The inverter board 20 at the non-inserted position is positioned relative to the chassis 14 in at least one direction along the board surface of the inverter board 20. Therefore, when the inverter board 20 is at the non-inserted position or moved from the non-inserted position to the inserted position, the components mounted on the inverter board 20 are less likely to hit the parts of the chassis 14.

The positioning structures includes the first positioning structures for positioning the inverter boards 20 in the first direction along the respective insertion directions of the inverter boards 20 to the respective relay connectors 21. With this configuration, the inverter boards 20 at the non-inserted positions can be positioned in the respective first directions along the respective insertion directions of the inverter boards 20.

The first positioning structures include the first positioning protrusions 31 and the first positioning recesses 32. The first positioning protrusions 31 are provided on either one of each inverter board 20 and the chassis 14. The first recesses 32 are provided in the other one of each inverter board 20 and the chassis 14 so as to receive the first positioning protrusions 31. The clearances are provided between the first positioning protrusions 31 and the edges of the respective first positioning recesses 32 with respect to the insertion direction. When the inverter board 20 is at the non-inserted position, the front-end portions 31a of the first protrusions 31 with respect to the insertion direction are in contact with the front-end edges 32a of the respective first positioning recesses 32. Moreover, the rear-end portions 31b of the first protrusions 31 with respect to the insertion direction are separated from the rear-end edges 32b. With this configuration, during setting of each inverter board 20 to the non-inserted position, the inverter board 20 is less likely to move relative to the chassis 14 toward the rear with respect to the insertion direction. Furthermore, the movement of each inverter board 20 is allowed within the range corresponding to the clearances between the first positioning protrusions 31 and the edges of the first positioning recesses 32.

The first positioning protrusions 31 and the first positioning recesses 32 are formed such that the rear-end portions 31b are in contact with the respective rear edges 32b when the inverter boards 20 are at the inserted positions. When each inverter board 20 is moved from the non-inserted position to the inserted position, the inverter board 20 is less likely to move relative to the chassis 14 toward the front with respective to the insertion direction.

The first positioning protrusions 31 are provided on the chassis 14 and the first positioning recesses 32 are provided in the inverter boards 20. If the first positioning protrusions are provided on the inverter boards 20, special design is required. In comparison to such a configuration, the inverter boards 20 can be provided with positioning structures at low cost.

The first positioning recesses 32 are formed by cutting parts of the inverter boards 20. By viewing the inverter boards 20 from the opposite side from the chassis 14, the positions of the first protrusions 31 inserted in the first positioning recesses 32 can be confirmed. Therefore, the inverter boards 20 are precisely positioned.

The positioning structures further include the second positioning structures. The second positioning structures are provided for positioning each inverter board 20 in the second direction perpendicular to the first direction that is along the insertion direction of the inverter board 20 in the relay connectors 21. With this configuration, each inverter board 20 at the non-inserted position is properly positioned with respect to the second direction perpendicular to the first direction that is along the insertion direction of the inverter board 20.

The second positioning structures are provided on the chassis 14. The second positioning structures include the second positioning parts 33 that are in contact with the inverter board 20. With this configuration, when each inverter board 20 is moved between the non-inserted position and the inserted position, the movement thereof is guided by the second positioning parts 33. Therefore, the inverter board 20 can be stably moved.

The second positioning parts 33 are in contact with the side surfaces 20e of the inverter boards 20. With this configuration, the inverter boards 20 do not require special processing and thus they can be prepared at low cost.

The positioning structures include the first positioning structures for positioning each inverter board 20 with respect to the first direction that is along the insertion direction of the inverter board 20 in the relay connectors 21. The second positioning structures are connected to the first positioning structures. Namely, the first positioning structures and the second positioning structure are collectively arranged in one area. This is preferable for reducing the size and improving flexibility in design.

The board stoppers 34 are provided on the chassis 14. The board stoppers 34 hold the inverter boards 20 from the side opposite from the chassis 14. With the board stoppers 34, the inverter boards 20 are less likely to be deformed in the direction opposite to the chassis 14.

The board stoppers 34 are arranged so as to be in contact with the front-end portions of the inverter boards 20 at the inserted positions. The front-end portion of each inverter board 20 is located at the front end with respect to the insertion direction of the inverter board 20. Because the front-end portions of the inverter boards 20 at the inserted positions are held by the board stoppers 34, reliability in connections between the inverter boards 20 and the relay connectors 21 improves.

The positioning structures are arranged away from each other at the front position and at the rear position located at the front and the rear of the insertion direction of each inverter board 20 in the relay connectors 21. With this configuration, each inverter board 20 can be precisely positioned. Furthermore, the positioning structures may be arranged such that a person working on them can visually confirm the positions thereof. With such a configuration, they are easily viewed.

The positioning structures are arranged at the ends with respect to the second direction perpendicular to the first direction that is along the insertion direction of the inverter board 20 in the relay connectors 21. In comparison to positioning structures arranged at the middle with respect to the second direction, limitations in design of layouts of wiring patterns and components are few.

The positioning structures are provided at the ends with respect to the second direction perpendicular to the first direction that is along the insertion direction of the inverter board 20 in the relay connectors 21. In comparison to positioning structures arranged at the middle with respect to the second direction, limitations in design of layouts of wiring patterns and components are few. Furthermore, with the positioning structures provided at the ends with respect to the second direction, each inverter board 20 is precisely positioned.

The lead components 20a are mounted to the surface of each inverter board 20 away from the chassis 14. The wiring patterns are formed on the surface close to the chassis 14 and the chip components 20b are mounted on the surface. Each inverter board 20 is positioned relative to the chassis 14 by the positioning structures. Therefore, the wiring patterns formed on the surface of the inverter board 20 close to the chassis 14 and the chip components 20b mounted on the same surface are less likely to be damaged. Furthermore, even when the leads of the lead components 20a mounted on the surface of each inverter board 20 away from the chassis 14 project from the surface close to the chassis 14, the leads are less likely to be damaged.

The covers 22 are mounted to the chassis 14 between the respective inverter boards 20 and the chassis 14. Each cover 22 includes the positioning structures on the chassis 14 side. In comparison to the positioning structures provided at the chassis 14, flexibility in design of shapes or layouts of the positioning structures improves.

The chassis 14 has the connector insertion holes 14b that are through holes through which the relay connectors 21 are passed. Each cover 22 has connector holes 25 that are through holes in which the relay connectors 21 are fitted. The connector holes 25 continue to the respective connector insertion holes 14b. The relay connectors 21 are mounted while they are passed through the respective connector insertion holes 14b of the chassis 14 and the respective connector holes 25 of the cover 22.

Each connector insertion hole 14b is larger than the connector hole 25. Therefore, each relay connector 21 is sufficiently separated from the edges of the corresponding connector insertion hole 14b of the chassis 14. Even when a high-voltage current runs through the relay connector 21, the current is less likely to leak to the chassis 14 side.

Each cover 22 includes the holding protrusions 26 that are fitted in the respective connector insertion holes 14b. Each holding protrusion 26 is located between the edge of the corresponding connector insertion hole 14b of the chassis 14 and the corresponding relay connector 21. Therefore, the relay connectors 22 are properly isolated from the chassis 14. Furthermore, the covers 22 are positioned relative to the chassis 14.

A plurality of the connector holes 25 are provided in each cover 22 in a parallel layout along the second direction perpendicular to the first direction that is along the insertion direction of the inverter board 20 in the relay connectors 21. The block wall portion 28 is provided in each area of each cover 22 between the adjacent connector holes 25. The block wall portion 28 projects from the area toward the inverter board 20 and is in contact with the inverter board 20 that is at the inserted position. The block wall portions 28 block foreign substances that intend to enter through spaces between the adjacent relay connectors 21.

The block wall portions 28 are arranged so as to be in contact with the front ends of the inverter board 20 that are at the inserted positions with respect to the insertion directions. With this configuration, foreign substances are properly blocked and not in contact with the inverter boards 20.

The ribs 27 project from the edges of the connector holes 25 toward the inverter boards 20. The block wall portions 28 are connected to the respective ribs 27. By connecting the block wall portions 28 to the respective ribs 27, no gaps are present when viewed from the front in the insertion direction. Foreign substances are properly blocked. Furthermore, the strength increases.

Each cover 22 includes the board support portions 30 that project toward the corresponding inverter board 20 and are in contact with the inverter board 20. They support the inverter board 20 at least when it is at the inserted position. With this configuration, the chassis 14 and the inverter board 20 can be maintained at the preferable relative positions with respect to the direction perpendicular to the board surface of the inverter board 20.

The board support portions 30 include the support protrusions 30a, the center vertical support walls 30b and horizontal support walls 30d. The support protrusions 30a are center support portions that support the central area of each inverter board 20 with respect to the second direction perpendicular to the first direction that is along the insertion direction of the inverter board 20 in the relay connectors 21. Because the central area of each inverter board 20 is supported by the support protrusions 30a, the center vertical support walls 30b, and the horizontal support walls 30d, a deformation of the inverter board 20 including a warp is less likely to occur. Especially, if the backlight unit 12 is prepared in a large size, the inverter boards 20 may be also prepared in a large size and thus the deformation including the warp is more likely to occur. Therefore, this configuration is especially effective for the backlight unit 12 in a large size.

The support protrusions 30a of the center support portions are arranged in the parallel layout along the second direction. With this configuration, the deformation of each inverter board 20 including the warp is further less likely to occur. This configuration is more effective for the inverter boards 20 in a large size.

The support protrusions 30a of the center support portions are arranged adjacently to the relay connectors 21. With this configuration, the deformation of each inverter board 20 including the warp around the areas adjacent to the relay connectors 21 is further less likely to occur. Therefore, the reliability in connection between the inverter boards 20 and the relay connectors 21 improves.

The board support portions 30 include the end vertical support walls 30c and the rear vertical support walls 30e. The vertical support walls 30c support the ends of the inverter board 20 with respect to the second direction perpendicular to the first direction that is along the insertion direction of the inverter board 20 in the relay connectors 21. The ends of the inverter board 20 are supported by the end vertical support walls 30c and the rear vertical support walls 30e.

The end vertical support walls 30c and the rear vertical support walls 30e of the end support portions are provided in pairs so as to support the ends of the inverter board 20. The ends of the inverter board 20 are supported by the pairs of the end support portions.

The first positioning protrusions 31 are connected to the end vertical support walls 30c and the rear vertical support walls 30e. The first positioning protrusions 31 are the positioning structures on the chassis 14 side. The end vertical support walls 30c, the rear vertical support walls 30e, and the first positioning protrusions 31 are collectively arranged in respective areas. This is preferable for reducing the size and improving flexibility in design.

### <Second embodiment>

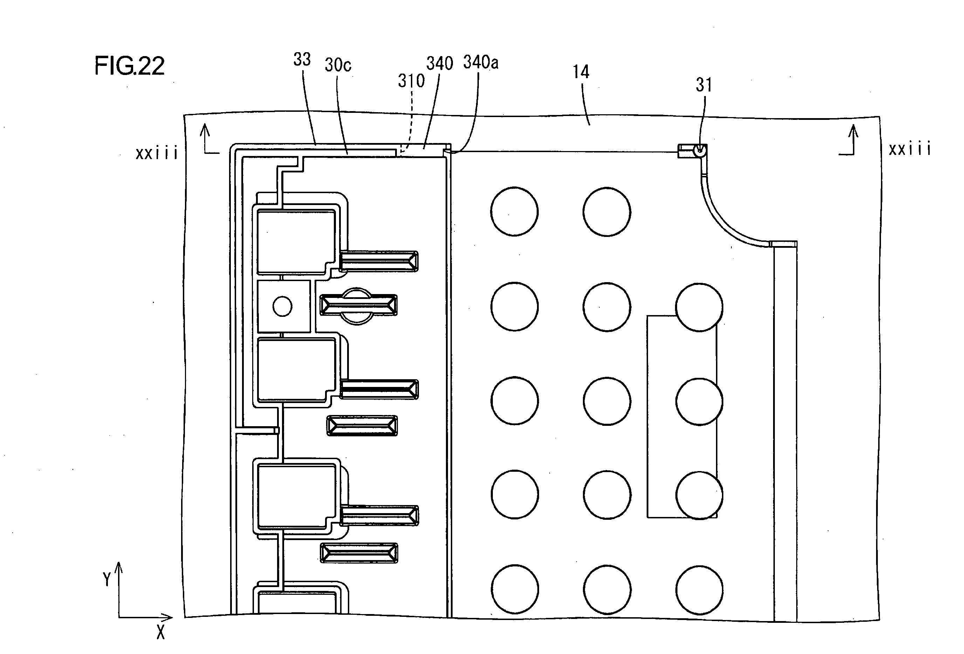

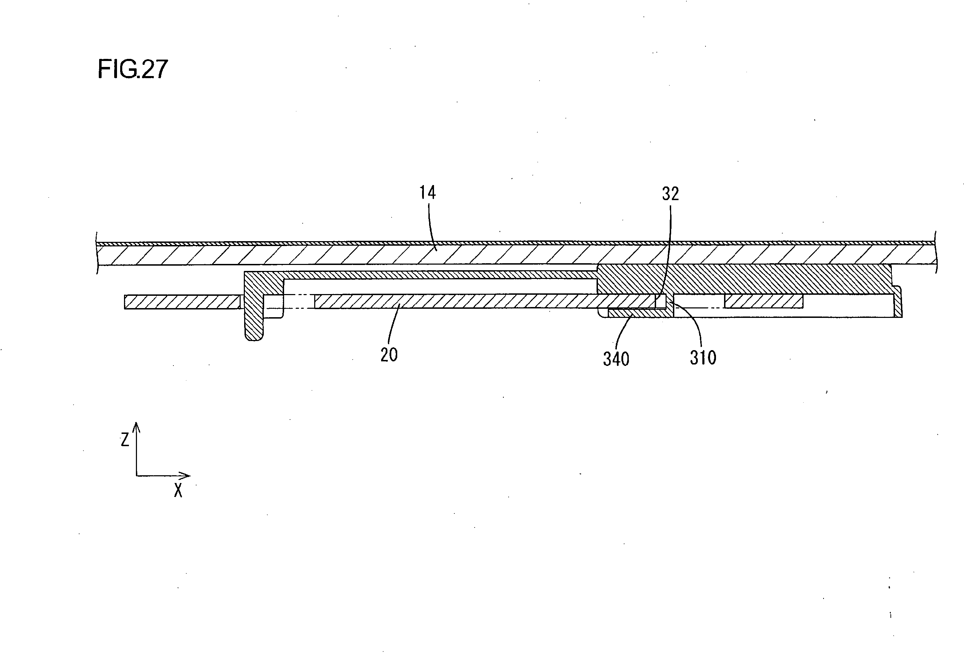

The second embodiment of the present invention will be explained with reference to FIGS. 22 to 27. In this embodiment, front first positioning protrusions 310 and board stoppers 340 having different configurations from the first embodiment are provided. In this embodiment, similar parts to those in the first embodiment will be indicated by the same symbols. They will not be illustrated in the drawings and will not be explained.

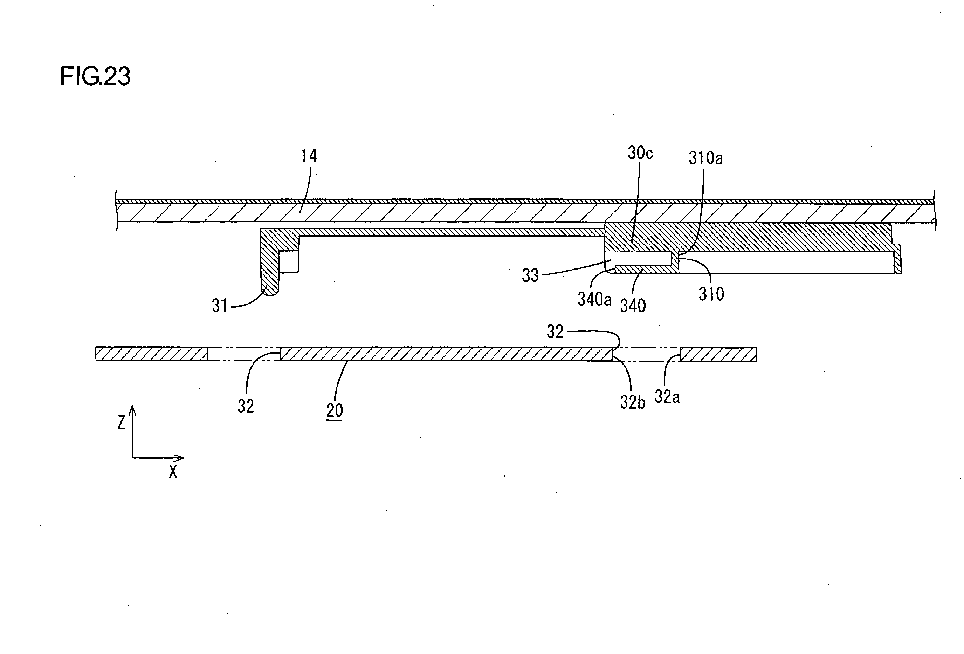

As illustrated in FIGS. 22 and 23, each board stopper 340 projects from a distal end of the corresponding first positioning protrusion 310 to the rear. The board stopper 340 extends along the X-axis direction and faces the end vertical support wall 30c with a predetermined gap (in about the same size to the thickness of the inverter board 20). An entire outer edge of the board stopper 340 is connected to the second positioning part 33. The length of the board stopper 340 (the X-axis dimension) is substantially equal to a dimension of a clearance between the first positioning protrusion 310 and an edge of the first positioning recess 32 created when the inverter board 20 is at the non-inserted position. The X-axis dimensions of the first positioning protrusion 310 and the board stopper 340 are substantially equal to the X-axis dimension of the front first positioning recess 32 located in the front area of the inverter board 20. The front positioning protrusion 310 provided integrally with the board stopper 340 has a rectangular cross section. In the following description, the effects of the front first positioning protrusions 310 and the front positioning recesses 32 will be explained.

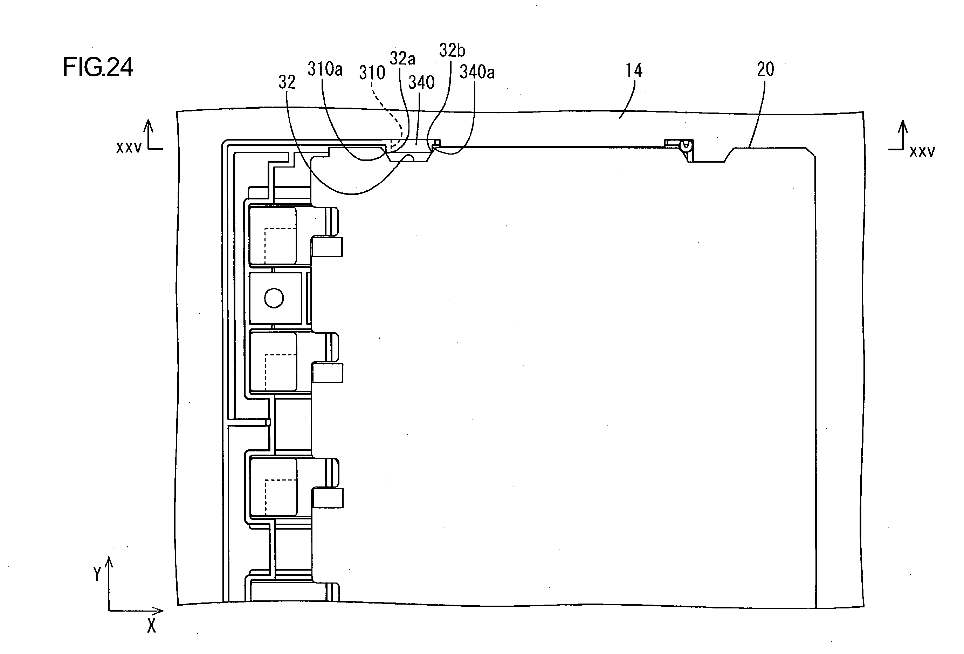

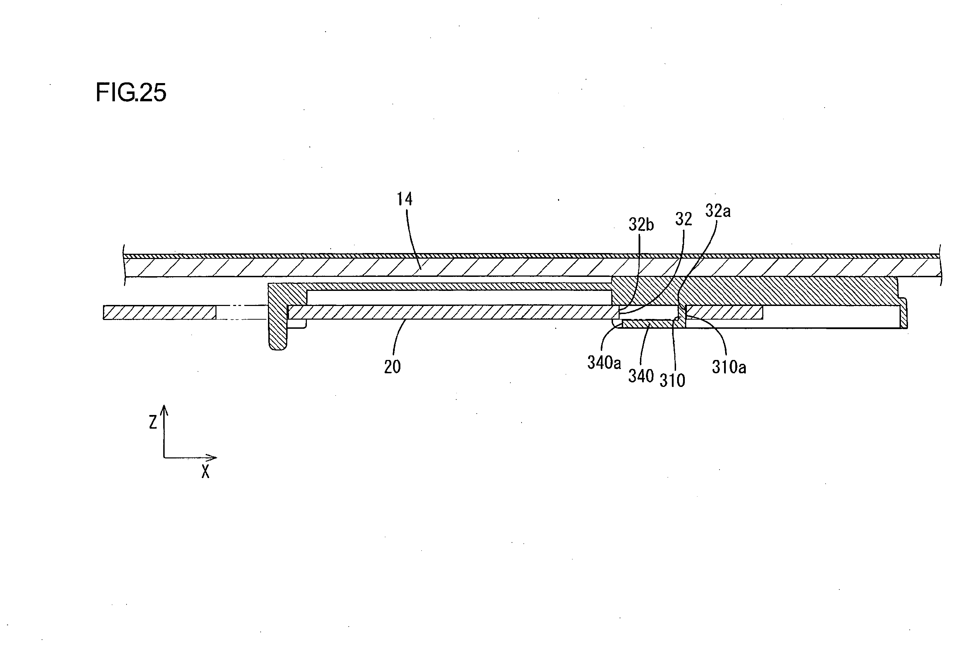

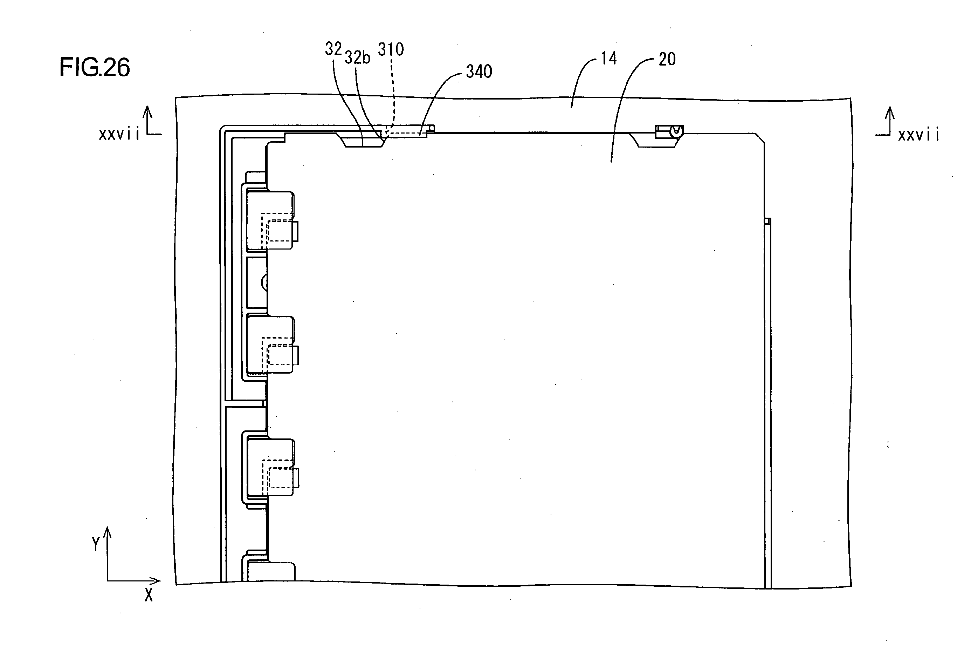

When each inverter board 20 is moved from the removal position illustrated in FIG. 23 to the non-inserted position, the first positioning protrusions 310 and the board stoppers 340 are positioned relative to the first positioning recesses 32 with respect to the X-axis direction. As illustrated in FIGS. 24 and 25, the front-end portions 310a of the first positioning protrusions 310 are in contact with the front-end edges 32a of the first positioning recesses 32. Moreover, the rear-end portions 340a of the board stoppers 340 are in contact with the rear edges 32b of the first positioning recesses 32. During setting of the inverter board 20 to the non-inserted position, the front and the rear of the inverter board 20 is precisely positioned with respect to the X-axis direction. As illustrated in FIGS. 26 and 17, after the inverter board 20 is set at the non-inserted position, it is pushed to the front and set at the inserted position. The board stoppers 340 are in contact with areas of the inverter board 20 immediately behind the first positioning recesses 32 from the rear. Therefore, the inverter board 20 is less likely to be deformed.

As described above, each first positioning protrusion 310 is provided integrally with the board stopper 340 that in contact with the inverter board 20 from an opposite side from the chassis 14. Each first positioning recess 32 is formed in a size so as to allow the board stopper 340 to pass through. The board stoppers 340 restrict a deformation of the inverter board 20 toward the opposite side from the chassis 14. By providing each board stopper 340 integrally with the first positioning protrusion 310, they are collectively arranged in one area. This is preferable for reducing the size and improving flexibility in design.

Each board stopper 340 projects from the first positioning protrusion 310 to the rear. If the board stopper projects from the positioning protrusion 310 in the Y-axis direction, it may be an obstacle for mounting of the inverter board 20. Because the board stopper 340 projects from the first positioning protrusion 310 to the rear along the insertion direction, such a problem is less likely to occur.

The rear-end portion of each board stopper 340 is in contact with the rear edge of the corresponding first positioning recess 32 with respect to the insertion direction during setting of the inverter board 20 to the non-inserted position. During setting of the inverter board 20 to the non-inserted position, the front end of the first positioning protrusion 310 is in contact with the front edge of the first positioning recess 32 with respect to the insertion direction. Moreover, the rear end of the board stopper 340 is in contact with the rear edge of the first positioning recess 32 with respect to the insertion direction. Therefore, the front and the rear of the inverter board 20 are positioned with respect to the insertion direction.

### <Other embodiments>

The present invention is not limited to the above embodiments explained in the above description. The following embodiments may be included in the technical scope of the present invention, for example.

(1) In the above embodiment, the first positioning structures and the second positioning structures are provided as positioning structures for positioning the inverter boards. However, only the first positioning structures may be provided for positioning the inverter boards only in the X-axis direction, or only the second positioning structures may be provided for positioning the inverter boards only in the Y-axis direction.

(2) In the above embodiments, the first positioning protrusions are provided on the covers on the chassis side and the first positioning recesses are provided in the inverter boards as the first positioning structures. However, the first positioning recesses may be provided in the covers on the chassis side, and the first positioning protrusions may be provided on the inverter boards.

(3) In the above embodiments, the first positioning recesses are formed by cutting parts of the inverter boards. However, the first positioning recesses may be formed by denting parts of the surfaces of the inverter boards. To form the first positioning recesses in the covers on the chassis side, they are formed in the same manner as above. Namely, the first positioning recesses may be formed by denting parts of the rear surfaces of the covers.

(4) In the above embodiments, when each inverter board is set at the inserted position, the rear-end portions of the first positioning protrusions are in contact with the rear edges of the first positioning recesses. However, the rear-end portions may not be in contact with the rear edges. In such a case, the front-end surfaces of the connector connecting portions are pressed against the extending portions of the front wall portions. Therefore, the movement of the inverter board to the front is still restricted.

(5) In the second embodiment, the board stoppers are provided integrally only with the front first positioning protrusions. However, the board stoppers may be provided integrally with the front first positioning protrusions and the rear first positioning protrusions, or provided integrally only with the rear first positioning protrusions.

(6) In the second embodiment, the rear-end portion of each board stopper is in contact with the rear edge of the first positioning recess during setting the inverter board at the non-inserted position. However, they may not be in contact with each other.

(7) In the above embodiments, the second positioning parts are in contact with the respective side surfaces of the inverter board. However, the inverter board may have recesses (including cutouts) in which the second positioning parts are inserted, and side walls of the recesses may be in contact with the second positioning parts.

(8) In the above embodiments, the first positioning protrusions are connected to the second positioning parts. However, they may be separated and independently provided.

(9) In the above embodiments, the board stoppers are connected to the second positioning parts or the first positioning protrusions. However, they may be separated and independently provided.

(10) In the above embodiments, the first protrusions are connected to the respective vertical support walls of the board support portions. However, they may be separated and independently provided.

(11) In the above embodiments, the board stoppers are in contact with the front-end portion of the inverter board. However, the board stoppers may be arranged at different locations so as to be in contact with another part of the inverter board.

(12) In the above embodiments, the first positioning structures and the second positioning structures are provided at different locations away from each other in the front-rear direction. However, the first positioning structures or the second positioning structures may be provided at an X-axis position (the X-axis along the first direction).

(13) In the above embodiments, the first positioning structures and the second positioning structures are provided at the ends of the Y-axis dimension (along the second direction). However, the first positioning structures or the second positioning structures may be provided at only one of the ends of the Y-axis dimension of the inverter board. The first positioning structures or the second positioning structures may be provided around the middle of the Y-axis dimension of the inverter board.

(14) Different kinds of components from those in the above embodiments may be mounted on the inverter boards.

(15) In the above embodiments, the covers are mounted to the chassis. However, the covers may not be included and the chassis may include the positioning structures.

(16) In the above embodiments, each connector insertion hole of the chassis is larger than the connector hole of the cover. However, the connector insertion hole and the connector holes may be formed in the same size or having an opposite size-relationship. In that case, the holding protrusions of the cover may not be provided.

(17) In the above embodiments, the block wall portions of the covers are connected to the ribs. However, they may be separated and independently provided. In that case, each block wall portion may be arranged in a part of an area between the adjacent connector holes.

(18) In the above embodiments, the covers include the support protrusions, the front vertical support walls, the rear vertical support walls and the horizontal support walls as the board support portions. However, one or more, even all, of them may not be included. The number, shapes, and arrangements of the board support portions may be altered as necessary.

(19) In the above embodiments, each inverter board is directly connected to the relay connectors. However, a relay board electrically connected to the inverter board via an FPC may be connected to the relay connectors such that the inverter board is indirectly connected to the relay connecters.

(20) In the above embodiments, each inverter board is provided for the electrodes at the respective ends of the cold cathode tubes. However, one of the inverter boards may not be provided and the cold cathode tubes may be driven by a single inverter board on one side. In that case, the relay connectors on a side on which the inverter board is not provided (i.e., on a lower potential side) may be connected to a grounding circuit.

(21) In the above embodiments, each cold cathode tube includes the outer lead extending from the ends of the glass tube, and the outer leads are connected to the connectors. However, ferrules connected to the outer leads may be fitted onto the glass tube, and the ferrules may be connected to the connectors.

(22) In the above embodiments, the cold cathode tubes that are one kind of fluorescent tubes are used as light sources. However, other types of fluorescent tubes including hot cathode tubes can be used. Furthermore, discharge tubes (e.g., mercury lamps) other than the fluorescent tubes can be used.

(23) In the above embodiments, the TFTs are used as switching components of the liquid crystal display device. However, the technology described herein can be applied to liquid crystal display devices using switching components other than TFTs (e.g., thin film diodes (tods) Furthermore, it can be applied to white-and-black liquid crystal display devices other than the color liquid crystal display device.

(24) In the above embodiments, the liquid crystal display device including the liquid crystal panel as a display component is used. However, the present invention can be applied to display devices including other types of display components.

(25) In the above embodiments, the television receiver including the tuner is used. However, the technology can be applied to a display device without the tuner.

## Claims

1. A lighting device comprising:
a light source;
a chassis housing the light source;
a power supply board arranged on a side of the chassis opposite from the light source and configured to supply drive power to the light source;
a relay connector mounted to the chassis and configured to relay power supply from the power supply board to the light source; and
a positioning structure, wherein
the power supply board is movable along a board surface of the power supply board between a non-inserted position and an inserted position, the power supply board being separated from the relay connector at the non-inserted position and inserted in the relay connector at the inserted position, and
the positioning structure positions the power supply board relative to the chassis in at least one of a first direction and a second direction, the first direction being along an insertion direction of the power supply board in the relay connector, the second direction being substantially perpendicular to the first direction.

2. The lighting device according to claim 1, wherein the positioning structure includes a first positioning structure that positions the power supply board in the first direction along the insertion direction of the power supply board in the relay connector.

3. The lighting device according to claim 2, wherein the first positioning structure includes a first positioning protrusion and a first positioning recess, the first positioning protrusion being provided on either one of the power supply board and the chassis, the first positioning recess being provided in the other one of the power supply board and the chassis so as to receive the first positioning protrusion with a clearance with respect to the insertion direction such that a front-end portion of the first positioning protrusion is in contact with a front edge of the first positioning recess with respect to the insertion direction and a rear-end portion of the first positioning protrusion is separated from a rear edge of the first positioning recess with respect to the insertion direction with the power supply board at the non-inserted position.

4. The lighting device according to claim 3, wherein the rear-end portion of the first positioning protrusion is in contact with the rear edge of the first positioning recess with the power supply board in the insertion direction.

5. The lighting device according to any one of claims 3 and 4, wherein the first positioning protrusion and the first positioning recess are provided on the chassis and in the power supply board, respectively.

6. The lighting device according to claim 5, wherein the first positioning recess is formed by cutting a part of the power supply board.

7. The lighting device according to claim 6, further comprising a board stopper provided integrally with the first positioning protrusion and in contact with the power supply board from a side opposite from the chassis, wherein
the positioning recess is in a size that allows the board stopper to pass therethrough.

8. The lighting device according to claim 7, wherein the board stopper projects from the first positioning protrusion to the rear with respect to the insertion direction.

9. The lighting device according to claim 8, wherein a rear-end portion of the board stopper is in contact with the rear edge of the first positioning recess.

10. The lighting device according to any one of claims 1 to 9, wherein the positioning structure includes a second positioning structure that positions the power supply board in the second direction perpendicular to the first direction along the insertion direction of the power supply board in the relay connector.

11. The lighting device according to claim 10, wherein the second positioning structure includes a second positioning part that is in contact with the power supply board during a movement of the power supply board between the non-inserted position and the inserted position.

12. The lighting device according to claim 11, wherein the second positioning part is in contact with a side surface of the power supply board.

13. The lighting device according to any one of claims 10 to 12, wherein:
the positioning structure includes a first positioning structure that positions the power supply board in the first direction along the insertion direction of the power supply board in the relay connector; and
the second positioning structure is connected to the first positioning structure.

14. The lighting device according to any one of claims 1 to 13, further comprising a board stopper provided on the chassis and in contact with the power supply board from a side opposite from the chassis.

15. The lighting device according to claim 14, wherein the board stopper is in contact with the front-end portion of the power supply board with respect to the insertion direction with the power supply board in the insertion direction.

16. The lighting device according to any one of claims 1 to 15, wherein the positioning structures are arranged at the front and the rear so as to be away from each other in the insertion direction of the power supply board in the relay connector.

17. The lighting device according to any one of claims 1 to 16, wherein the positioning structures are arranged at an end with respect to the second direction perpendicular to the first direction that is along the insertion direction of the power supply board in the relay connector.

18. The lighting device according to any one of claims 1 to 16, wherein the positioning structures are arranged at ends with respect to the second direction perpendicular to the first direction that is along the insertion direction of the power supply board in the relay connector.

19. The lighting device according to any one of claims 1 to 18, further comprising:
a lead component mounted on a surface of the power supply board away from the chassis;
a wiring pattern formed on a surface of the power supply board close to the chassis; and
a chip component mounted on the surface of the power supply board close to the chassis.

20. The lighting device according to any one of claims 1 to 19, further comprising a cover mounted to the chassis between the chassis and the power supply board, wherein
the positioning structure on a chassis side is provided on the cover.

21. The lighting device according to claim 20, wherein:
the chassis has at least one connector insertion hole that is a through hole receiving the relay connecter; and
the cover has at least one connector hole that is a through hole continuing to the connector insertion hole and receiving the relay connector.

22. The lighting device according to claim 21, wherein the connector insertion hole is larger than the connector hole.

23. The lighting device according to claim 22, the cover has a holding protrusion.

24. The lighting device according to any one of claims 21 to 23, wherein:
the at least one connector hole includes a plurality of connector holes formed in the cover in a parallel layout along the second direction perpendicular to the first direction that is along the insertion direction of the power supply board in the relay connector; and
the cover has a block wall portion in an area between the adjacent connector holes, the block wall portion projects toward the power supply board and in contact with the power supply board at the inserted position.

25. The lighting device according to claim 24, wherein the block wall portion is in contact with the front-end portion of the power supply board at the inserted position.

26. The lighting device according to any one of claims 24 and 25, wherein:
the cover has ribs projecting from edges of the connector holes toward the power supply board; and
the block wall portion is connected to the ribs.

27. The lighting device according to any one of claims 20 to 26, the cover has at least one board support portion projecting toward the power supply board and being in contact with the power supply board so as to support at least the power supply board at the non-inserted position.

28. The lighting device according to claim 27, the at least one board support portion includes a center support portion that supports a center portion of the power supply board with respect to the second direction perpendicular to the first direction that is along the insertion direction of the power supply board in the relay connector.

29. The lighting device according to claim 28, wherein the at least one board support portion includes a plurality of board support portions arranged in a parallel layout in the second direction.

30. The lighting device according to any one of claims 28 and 29, wherein the at least one board support portion is arranged adjacently to the relay connector.

31. The lighting device according to any one of claims 27 to 30, wherein the at least one board support portion includes at least one end support portion supporting an end of the power supply board with respect to the second direction perpendicular to the first direction that is along the insertion direction of the power supply board in the relay connector.

32. The lighting device according to claim 31, wherein the at least one end support portion includes a pair of end support portions supporting ends of the power supply board.

33. The lighting device according to any one of claims 31 and 32, wherein the at least one end support portion is connected to the positioning structure on the chassis side.

34. A display device, comprising:
the lighting device according to any one of claims 1 to 33; and
a display panel arranged configured to provide display using light from the lighting device.

35. The display device according to claim 34, wherein the display panel is a liquid crystal panel including liquid crystals sealed between substrates.

36. A television receiver comprising the display device according to any one of claims 33 and 34.
